# FASCICULE DE BREVET EUROPEEN

(11) **EP 2 901 014 B1**
(45) Date de publication et mention de la délivrance du brevet: **19.10.2016**
(21) Numéro de dépôt: 13766504.8
(22) Date de dépôt: 19.09.2013
(51) Int. Cl.: F04B 1/047

(54) **APPAREIL HYDRAULIQUE PRÉSENTANT UNE STRUCTURE AMÉLIORÉE POUR SA MISE EN CYLINDRÉE**
HYDRAULISCHE VORRICHTUNG MIT EINER VERBESSERTEN STRUKTUR ZUR ZYLINDERIMPLEMENTIERUNG DAFÜR
HYDRAULIC APPARATUS HAVING AN IMPROVED STRUCTURE FOR THE CYLINDER IMPLEMENTATION THEREOF

(30) Priorité: 28.09.2012 FR 1259193; 25.04.2013 FR 1353800
(43) Date de publication de la demande: 05.08.2015
(73) Titulaire: Poclain Hydraulics Industrie, 60410 Verberie (FR)
(72) Inventeur: VIDAL, Stéphane, F-60410 Verberie (FR); DESUMEUR, Hervé, F-60410 Verberie (FR); HEREN, Jean, F-60410 Verberie (FR); RECOURA, Clément, F-60410 Verberie (FR); LEMAIRE, Gilles, F-60410 Verberie (FR)
(74) Mandataire: Regimbeau
(86) Numéro de dépôt international: PCT/EP2013/069523
(87) Numéro de publication internationale: WO 2014/048842

(56) Documents cités:
- EP-A1- 1 355 068
- DE-U1- 9 104 126
- FR-A1- 2 901 581
- GB-A- 2 068 474
- US-A- 5 263 401

## Description

### DOMAINE TECHNIQUE GENERAL

La présente invention concerne le domaine des appareils hydrauliques et des moyens associés pour permettre la mise en débit de tels appareils hydrauliques.

### ETAT DE L'ART

Dans l'ensemble du présent texte, on désignera par appareil hydraulique un appareil pouvant fonctionner en tant que moteur ou que pompe hydraulique, et étant par exemple piloté au moyen de l'inclinaison d'un plateau de commande dudit appareil hydraulique. Un appareil hydraulique comprend de manière conventionnelle une pluralité de pistons disposés dans des logements, et effectuant des mouvements de va et vient au contact d'une came.

On connaît les appareils hydrauliques présentant une configuration de roue libre, c'est-à-dire une configuration dans laquelle l'appareil hydraulique fonctionne sans pression et sans débit de fluide et plus particulièrement où les pistons ne sont pas en contact avec la came, une telle configuration étant par exemple avantageuse sur des engins ayant des conditions de travail mixtes. A cette configuration de roue libre s'oppose la configuration de travail, dans laquelle les pistons sont au contact de la came, et l'appareil hydraulique fonctionne avec une pression et un débit de fluide.

Une transmission hydraulique comprend ainsi typiquement un appareil hydraulique qui est en configuration de roue libre lorsque la transmission hydraulique n'est pas sollicitée, et passe en configuration de travail lorsqu'elle est sollicitée.

Ce passage de la configuration de roue libre à la configuration de travail est réalisé par une sortie des pistons, qui sont amenés au contact de la came, ou plus précisément leurs extrémités libres sont placées au contact de la came. Ce passage de la configuration de roue libre à la configuration de travail est appelé la mise en service de l'appareil hydraulique, et correspond à l'application d'un débit à l'appareil hydraulique.

La mise en service peut être réalisée en statique ou en dynamique.

La mise en service en statique implique l'immobilisation des différents composants, et est donc très contraignante en termes d'utilisation.

En dynamique, la mise en service entraine un appel instantané de débit, que les sources d'alimentation en débit ne peuvent pas fournir. Ceci implique que les pistons peuvent ne pas être tous en contact instantanément contre la came, et entraine donc un bruit.

De plus, la mise en service telle que communément réalisée dans de tels appareils hydrauliques entraine des chocs lors de la mise en contact des pistons sur la came, ce qui a un impact direct sur la durée de vie du moteur, ainsi que du bruit, ce qui est désagréable pour l'utilisateur, que la mise en service soit réalisée en statique ou en dynamique. En outre, la mise en service de l'appareil hydraulique n'est pas toujours instantanée, car il faut amener suffisamment d'huile pour sortir tous les pistons.

L'art antérieur est représenté par FR 2 901 581.

### PRESENTATION DE L'INVENTION

La présente invention vise à proposer un système ne présentant pas de tels inconvénients.

A cet effet, l'invention propose un appareil hydraulique à pistons radiaux, comprenant :
- un carter définissant un premier ensemble,
- un arbre définissant un second ensemble, lesdits premier et second ensembles étant libres en rotation l'un par rapport à l'autre,
- une came multilobes liée en rotation à l'un desdits premier ou second ensembles,
- un distributeur et un couvercle de distributeur
- un bloc cylindres monté libre en rotation par rapport auxdits premier et second ensembles, et comprenant une pluralité de cylindres dans lesquels sont disposés des pistons guidés à coulissement radial dans des cylindres respectifs du bloc cylindres et prenant appui sur les lobes de la came, ledit appareil comprend des ressorts d'appui disposés dans lesdits cylindres de manière à maintenir les pistons en appui contre la came,
caractérisé en ce que ledit appareil hydraulique comprend en outre des moyens d'engagement en rotation adapté pour, lors de l'application d'une commande, immobiliser le bloc cylindres par rapport à l'autre desdits premier ou second ensembles.

Ledit appareil hydraulique présente typiquement une ou plusieurs des caractéristiques suivantes, prises indépendamment ou en combinaison :
- lesdits moyens d'engagement sont adaptés pour réaliser un engagement par frottement dudit bloc cylindres avec ledit premier ou second ensemble ;
- l'un desdits ressorts d'appui présente une raideur supérieure à la raideur desdits autres ressorts d'appui, de manière à définir une indexation du bloc cylindres par rapport à la came lorsque le bloc cylindres est libre en rotation par rapport auxdits premier et second ensembles.

La came est typiquement :
- soit liée en rotation à l'arbre, les moyens d'engagement étant adaptés pour lier en rotation le bloc cylindres au carter ;
- soit liée en rotation au carter, les moyens d'engagement étant adaptés pour lier en rotation le bloc cylindres à l'arbre.

L'appareil hydraulique comprenant en outre avantageusement un piston de synchronisation lié en rotation à l'autre desdits premier ou second ensembles et adapté pour coopérer avec un logement aménagé dans le bloc cylindres, ledit logement formant un secteur angulaire de manière à définir deux positions de butée du piston de synchronisation dans ledit logement, lesdites deux positions de butée définissant deux configurations des conduits internes du distributeur et du bloc cylindres correspondant aux deux sens de rotation de l'ensemble mobile dudit appareil hydraulique, ledit piston de synchronisation étant configuré de manière à positionner le bloc cylindres dans la position de butée adaptée préalablement à l'immobilisation par les moyens d'engagement du bloc cylindres par rapport à l'autre desdits premier ou second ensembles.

Selon un mode de réalisation particulier, lesdits moyens d'engagement comprennent
- des moyens de rappel tendant à déplacer le bloc cylindres pour le désengager en rotation par rapport à l'autre desdits premier ou second ensembles, et
- des conduits internes du distributeur configurés pour, lors de l'application d'une pression, engager le bloc cylindres en rotation par rapport à l'autre desdits premier ou second ensembles.

Selon un autre mode de réalisation particulier lesdits moyens d'engagement comprennent un électro-aimant, configuré de manière à, lors de son activation, générer un champ magnétique qui entraine une force d'attraction entre le bloc cylindres et un élément de frottement, de manière à immobiliser le bloc cylindres par rapport audit premier ou second ensemble.

Selon encore un mode de réalisation particulier lesdits moyens d'engagement comprennent un dispositif à dents et rainures aménagées sur les moyens d'engagement adapté pour coopérer avec des dents et rainures aménagées sur le bloc cylindres ou sur ledit premier ou second ensemble de manière à immobiliser le bloc cylindres par rapport audit premier ou second ensemble.

Selon un mode de réalisation particulier, lesdits moyens d'engagement comprennent
- une chambre étanche remplie d'huile et dans laquelle se trouvent des disques liés en rotation au bloc cylindres et à l'autre desdits premier ou second ensembles, et
- une chambre de commande adaptée pour piloter la pression au sein de la chambre étanche, de manière à réaliser un engagement par visco-couplage.

L'invention concerne également un système comprenant au moins deux appareils hydrauliques tels que définis précédemment, dans lequel un premier desdits appareils hydrauliques est lié à un moteur principal via un embrayage de manière à fonctionner en pompe, et alimenter via un circuit hydraulique, un second desdits appareils hydrauliques fonctionnant en tant que moteur pour réaliser une assistance sur un arbre d'entrainement d'une roue de véhicule, lesdits premier et second appareils hydrauliques comprenant une ligne de drain commune pour leurs carters respectifs reliée audit circuit hydraulique via des clapets anti-retour.

L'invention concerne par ailleurs un système comprenant au moins un appareil hydraulique tel que défini précédemment fonctionnant en moteur et montés chacun sur un essieu mené d'un véhicule, et une pompe hydraulique à cylindrée variable, ledit système comprenant en outre un calculateur adapté pour piloter la cylindrée de la pompe hydraulique de sorte que la cylindrée de la pompe hydraulique multipliée par sa vitesse d'entrainement en rotation soit égale à la cylindrée des totale desdits moteurs hydrauliques multipliée par la vitesse d'entrainement des moteurs hydrauliques menés liés aux essieux plus Epsilon, où Epsilon représente un glissement qui procure un effet de traction.

L'invention concerne par ailleurs, un véhicule comprenant un moteur primaire entrainant en rotation un essieu primaire définissant ainsi les roues motrices du véhicule, et un essieu secondaire, ledit véhicule comprenant un appareil hydraulique primaire tel que défini
précédemment monté sur ledit essieu primaire de manière à être entraîné en rotation à la même vitesse que lesdites roues motrices, et un appareil hydraulique secondaire tel que défini précédemment monté sur l'essieu secondaire de manière à être entraîné en rotation à la même vitesse que la ou les roues montées sur ledit essieu secondaire, lesdits appareils hydrauliques primaire et secondaire étant associés de manière à permettre l'entrainement de l'essieu secondaire par l'appareil hydraulique secondaire lors de la mise en service desdits appareils hydrauliques.

L'invention concerne en outre un procédé de mise en cylindrée d'un appareil hydraulique comprenant un carter définissant un premier ensemble, un arbre définissant un second ensemble, lesdits premier et second ensembles étant libres en rotation l'un par rapport à l'autre, une came multilobes liée en rotation à l'un desdits premier ou second ensembles, un bloc cylindres monté libre en rotation par rapport auxdits premier et second ensembles, et comprenant une pluralité de cylindres dans lesquels sont disposés des pistons guidés à coulissement radial dans des cylindres respectifs du bloc cylindres, prenant appui sur les lobes de la came et étant maintenus en appui contre la came,
ledit procédé étant caractérisé en ce qu'on pilote l'immobilisation du bloc cylindres par rapport à l'autre desdits premier ou second ensembles de manière à réaliser la mise en cylindrée de l'appareil hydraulique.

L'immobilisation du bloc cylindres par rapport à l'autre desdits premier ou second ensembles est avantageusement réalisée par application d'une pression dans un distributeur dudit appareil hydraulique entrainant le déplacement dudit distributeur de manière à ce qu'il agisse sur le bloc cylindres pour l'immobiliser par rapport à l'autre desdits premier ou second ensembles.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- la figure 1 présente une vue partielle en coupe d'un appareil hydraulique selon un aspect de l'invention,
- la figure 2 présente une vue partielle en coupe d'une variante d'appareil hydraulique selon un aspect de l'invention,
- les figures 3 à 10 présentent des vues en coupe partielle d'autres variantes d'appareils hydrauliques selon un aspect de l'invention,
- les figures 11 et 12 présentent deux vues d'un exemple d'intégration d'une variante d'appareil hydraulique selon un aspect de l'invention sur un essieu de véhicule,
- la figure 13 présentent une vue d'une autre variante d'appareil hydraulique selon un aspect de l'invention couplé avec un différentiel pour une intégration par exemple sur un essieu de véhicule,
- les figures 14 à 16 présentent plusieurs exemples de montages mettant en oeuvre des appareils hydrauliques selon un aspect de l'invention.

Sur l'ensemble des figures, les éléments communs sont repérés par des références numériques identiques.

### DESCRIPTION DETAILLEE

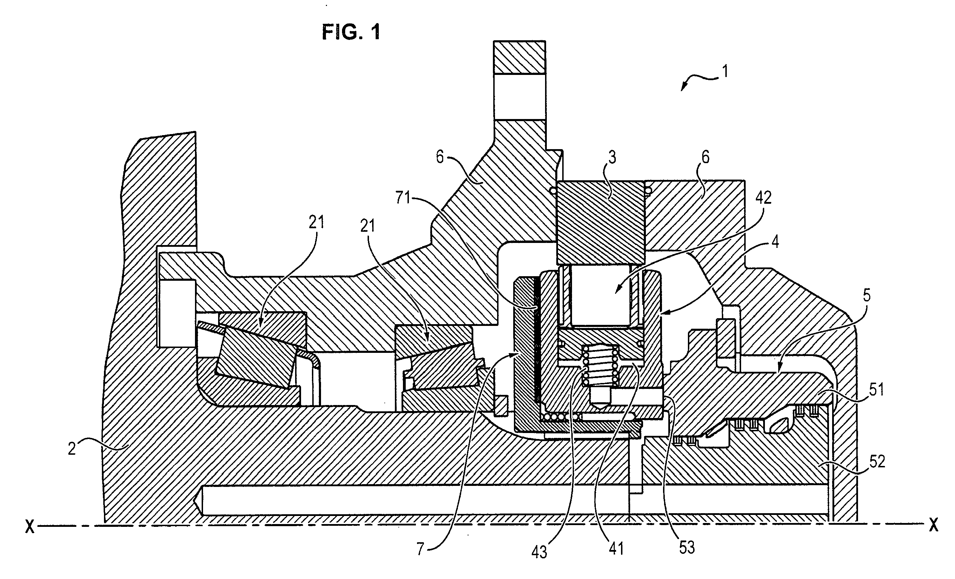

La figure 1 présente une vue partielle en coupe d'un appareil hydraulique selon un aspect de l'invention. On représente sur cette figure l'axe de rotation X-X de l'appareil hydraulique 1.

L'appareil hydraulique 1 comprend un arbre 2, une came 3 typiquement une came multilobes, un bloc cylindres 4, un distributeur 51, un couvercle de distributeur 52 et un carter 6.

Le carter 6 et l'arbre 2 sont montés tournant par rapport à l'autre, typiquement au moyen de roulements, en l'occurrence deux roulements coniques 21.

Dans la description qui suit, on considérera que l'arbre 2 est fixe et que le carter 6 est tournant afin d'illustrer un mode de réalisation de l'invention. On comprend bien que la configuration inverse, c'est-à-dire avec un carter 6 fixe et un arbre 2 tournant est également possible.

La came 3 est typiquement formée d'un anneau adjacent à la face axialement interne du carter 6, et comprend sur sa surface radialement interne, une série de lobes équi-répartis autour de l'axe X-X. Chacun des lobes a typiquement une allure globalement de type sinusoïdal.

Dans le mode de réalisation représenté, la came 3 est liée et solidaire en rotation avec le carter 6.

Le bloc cylindres 4 est placé à l'intérieur de l'anneau formant la came 3. Il définit une pluralité de cylindres 41 orientés radialement par rapport à l'axe X-X et débouchant sur la face périphérique extérieure du bloc cylindres 4 en regard de la came 3.

Un piston 42 est monté à coulissement radial respectivement dans chacun des cylindres 41. Chaque piston 42 prend appui sur la surface radialement interne de la came 3.

Le bloc cylindres 4 possède un alésage central par lequel il est engagé sur l'extrémité de l'arbre 2 de l'appareil hydraulique 1.

Le distributeur 51 et le couvercle de distributeur 52 sont adaptés pour appliquer de manière contrôlée un fluide sous pression successivement sur chacun des pistons 42, plus précisément dans la chambre interne des cylindres 41 adjacente aux pistons, de sorte que l'appui successif des pistons 42 sur les lobes de la came 3 entraîne la rotation relative du bloc cylindres 4 et des éléments qui lui sont liés par rapport à la came 3 et donc au carter 6 ou inversement. A cette fin, il existe une dissymétrie entre le nombre de lobes formés sur la came 3 et le nombre de pistons 42 associés situés dans le bloc cylindres 4.

On définit un plan de distribution 53 entre le distributeur 51 et le bloc cylindres 4, correspondant aux faces du distributeur 51 et du bloc cylindres 4 adaptées pour être mises en contact l'une de l'autre.

Dans le mode de réalisation représenté, le couvercle de distributeur 52 est lié en rotation à l'arbre 2, tandis que le distributeur 51 est lié en rotation au carter 6 par des moyens non représentés en détail.

Le bloc cylindres 4 comprend en outre un ressort 43 disposé dans chacun des cylindres 41, de manière à être en appui sur la face radialement interne de chacun des pistons 42, et ainsi les maintenir en appui contre la came 3 même en l'absence de pression hydraulique.

L'appareil hydraulique 1 selon un aspect de l'invention comprend en outre des moyens d'engagement 7 adaptés pour, lors de l'application d'une commande, immobiliser le bloc cylindres 4 par rapport à l'arbre 2. Dans le mode de réalisation représenté, les moyens d'engagement 7 sont montés fixe autour d'une extrémité de l'arbre 2, de manière à être partiellement disposés entre le bloc cylindres 4 et l'arbre 2.

Les moyens d'engagement 7 présentent en outre une surface d'appui 71 adaptée pour venir engager le bloc cylindres 4. Dans le mode de réalisation représenté, la surface d'appui est une collerette radiale, disposée de manière à venir engager par frottement une surface latérale du bloc cylindres 4.

Ainsi, les moyens d'engagement 7 peuvent être pilotés de manière à engager le bloc cylindres 4, et via l'application d'un effort de mise en contact suffisante, immobiliser le bloc cylindres 4 par rapport aux l'moyens d'engagement 7, et donc par rapport à l'arbre 2. Cette immobilisation du bloc cylindres 4 par rapport à l'arbre 2 réalise ainsi une mise en cylindrée de l'appareil hydraulique 1, c'est-à-dire sa mise en service comme défini précédemment.

Lorsque l'appareil hydraulique 1 n'est pas mis en service, c'est-à-dire que les moyens d'engagement ne lient pas en rotation le bloc cylindres 4, les ressorts 43 maintiennent les pistons 42 au contact de la came 3. Le bloc cylindre 4 est donc synchronisé par rapport à la came 3, c'est à dire lié en rotation à la came 3.

Lorsque l'appareil hydraulique 1 est mis en service, c'est-à-dire que le moyen d'engagement est activé, le bloc cylindre 4 est lié en rotation par rapport à l'arbre 2, et donc tournant par rapport à la came.

Les ressorts 43 maintiennent les pistons 42 au contact de la came 3 et les forcent donc à suivre la came 3 dans le cas d'un appareil hydraulique menant, qui présente alors un fonctionnement en pompe.

Le mouvement des pistons 42 implique ainsi une auto aspiration ; et un débit hydraulique va s'établir dans les conduites du circuit hydraulique associé.

Dans le cas d'un appareil hydraulique mené, l'application d'une pression dans les conduites du circuit associé actionne les moyens d'engagement 7 de manière à engager le bloc cylindres 4, tandis que les cylindres 41 des pistons 42 sont alimentés, ce qui met l'appareil hydraulique 1 en fonctionnement.

Les ressorts 43 ont alors un rôle actif lorsque les moyens d'engagement ne sont pas actionnés, en ce qu'ils maintiennent les pistons 42 au contact de la came 3.

Le bloc cylindre 4 est donc synchronisé par rapport à la came 3, c'est à dire lié en rotation à la came 3

Plusieurs variantes peuvent être envisagées afin de réaliser cette immobilisation du bloc cylindres 4 par rapport aux moyens d'engagement 7.

Selon une première variante, on dispose un électro aimant sur les moyens d'engagement 7 ou sur le bloc cylindres 4, qui permet ainsi d'obtenir un élément de contrôle et d'immobilisation pilotable.

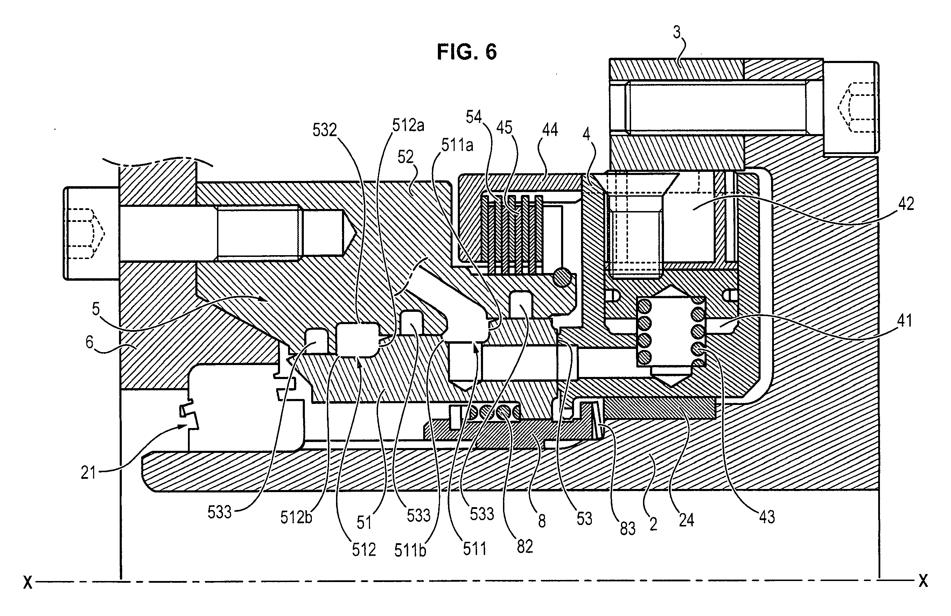

Selon un autre mode de réalisation, on dispose une piste de frottement sur les moyens d'engagement 7 et/ou sur le bloc cylindres 4. Un exemple d'un tel mode de réalisation qui sera décrit ci-après en référence à la figure 6 est l'utilisation de disques de frein liés respectivement aux moyens d'engagement 7 et au bloc cylindres 4, dont la mise en contact va permettre l'immobilisation progressive du bloc cylindres 4 par rapport aux moyens d'engagement 7 et donc par rapport à l'arbre 2.

Selon une autre variante, on utilise un dispositif à crabot, c'est-à-dire un dispositif à dents et rainures disposées sur les moyens d'engagement 7 et sur le bloc cylindres 4, permettant de les immobiliser en rotation lorsque ces dents et rainures sont engagées.

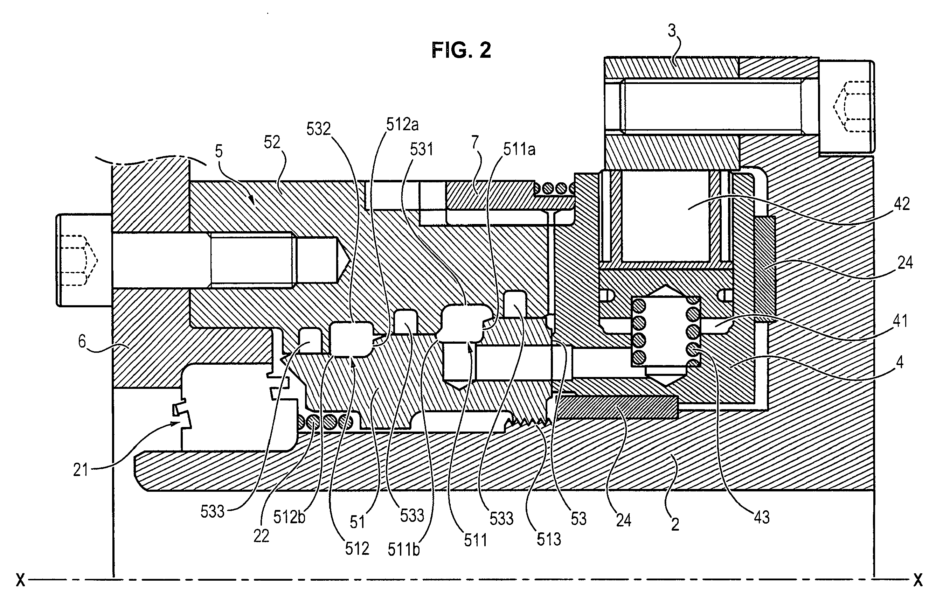

La figure 2 présente une vue partielle en coupe d'une variante d'appareil hydraulique selon un aspect de l'invention.

Dans cette variante, l'arbre 2 est lié en rotation à la came 3.

Le distributeur 51 est monté fixe en rotation sur l'arbre 2, autour de l'arbre 2, typiquement au moyen de rainures aménagées en surface de l'arbre 2 coopérant avec des nervures réalisées dans un alésage du distributeur 51.

Le couvercle de distributeur 52 est monté tournant autour de la périphérie externe du distributeur 51, et est lié en rotation au carter 6.

L'arbre 2 comprend plusieurs éléments de glissement 24 disposés de manière à permettre la rotation du bloc cylindres 4 par rapport à l'arbre 2. Ces éléments de glissement sont par exemple des patins, ou des roulements à billes, rouleaux ou aiguilles.

Un élément de rappel élastique, tel qu'un ressort 22 assure la mise en appui du distributeur 51 contre le bloc cylindres 4, avec un effort suffisant de manière à réaliser une étanchéité entre ces deux éléments 51 et 4.

On définit ainsi deux ensembles mobiles en rotation l'un par rapport à l'autre :
- un premier ensemble défini par le carter 6 et le couvercle de distributeur 52, et
- un second ensemble défini par l'arbre 2, la came 3 et le distributeur 51, lesdits premier et second ensembles étant libres en rotation l'un par rapport à l'autre.

Le bloc cylindres 4 est monté tournant par rapport à ces deux ensembles.

Les moyens d'engagement 7 sont ici montés sur le couvercle de distributeur 52 ; il s'agit d'un dispositif à crabot tel que décrit précédemment, c'est-à-dire un dispositif à dents et rainures aménagées sur les moyens d'engagement 7 coopérant avec des dents et rainures aménagées sur le bloc cylindres 4 et sur le couvercle de distributeur 52. Les moyens d'engagement 7 peuvent être déplacés en translation selon l'axe X-X de manière à être disposé uniquement sur l'un ou l'autre du bloc cylindre 4 ou du couvercle de distributeur 52 et ainsi laisser ces éléments 4 et 52 libres en rotation l'un par rapport à l'autre, ou de manière à être à cheval entre ces deux éléments 4 et 52 et ainsi les lier en rotation.

Les moyens d'engagement 7 permettent donc de lier le bloc cylindres 4 en rotation avec l'un des ensembles définis précédemment, en l'occurrence le premier ensemble, c'est-à-dire l'ensemble ne comprenant pas la came 3.

Par ailleurs, le distributeur 51 tel que représenté comprend des rainures 511 et 512 pour l'acheminement du fluide, qui coopèrent avec des rainures 521 et 522 aménagées dans le couvercle de distributeur 52 afin de former des canaux.

Des rainures 523 encadrant les canaux ainsi formés sont aménagées dans le couvercle de distributeur 52, ces rainures formant des logements adaptés pour recevoir des éléments d'étanchéité dynamiques. Les rainures 511 et 512 aménagées dans le distributeur 51 sont avantageusement réalisées de manière à présenter chacune deux parois latérales 511a, 511b, 512a et 512b, ces parois latérales étant réalisées de sorte que pour chacune des rainures 511 et 512, la paroi latérale qui est la plus proche du bloc cylindres 4 présente une surface supérieure à celle qui en est la plus éloignée.

En référence au mode de réalisation présenté sur la figure 2, les parois latérales 511a et 512a présentent une surface supérieure aux surfaces 511b et 512b.

Ainsi, l'alimentation en fluide sous pression va tendre à déplacer le distributeur 51 vers le bloc cylindres 4 sous l'effet de l'effort résultant de la pression appliquée à ces parois 511a et 512a.

Cette configuration particulière des rainures 511 et 512 permet ainsi d'assurer un auto-maintien de l'étanchéité entre le bloc cylindres 4 le distributeur 51. Une cannelure 513 immobilise en rotation le distributeur 51 par rapport à l'arbre 2 ; le distributeur 51 est ainsi solidaire en rotation avec la came 3 dans la mesure où cette dernière est solidaire en rotation de l'arbre 2, pour permettre de synchroniser l'alimentation des pistons sur le profil de came.

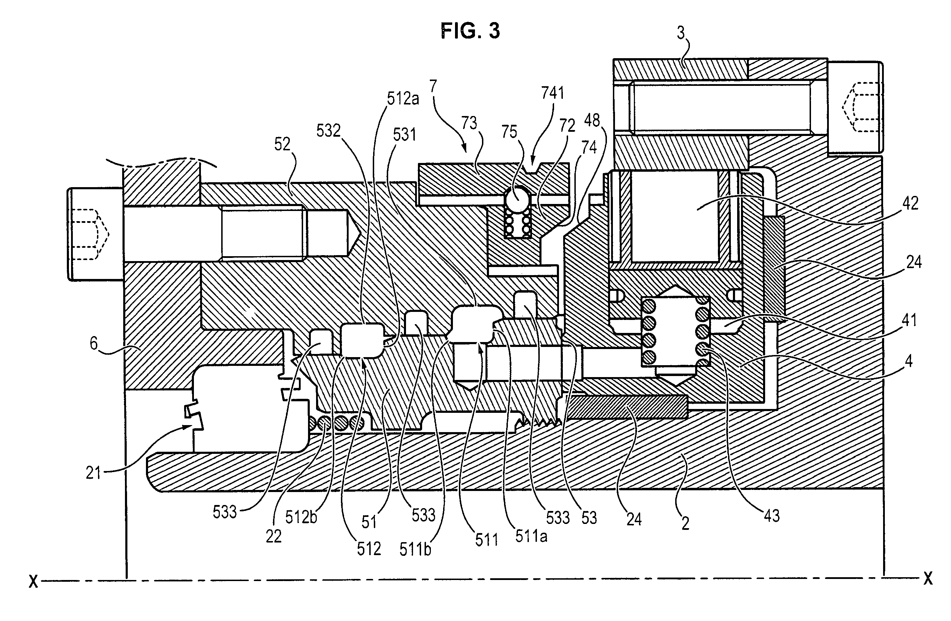

La figure 3 présente une variante du mode de réalisation de la figure 2, dans laquelle les moyens d'engagement 7 combinent une structure de crabot avec des surfaces de frottement adaptées pour réaliser une synchronisation du bloc cylindres 4 par rapport au couvercle de distributeur 52 sur lequel les moyens d'engagement 7 sont montés préalablement à l'engagement de ces deux pièces via le crabot.

Les moyens d'engagement 7 sont ainsi constitués de deux parties mobiles 72 et 73.

La première partie mobile 72 est montée coulissante sur le couvercle de distributeur 52, typiquement au moyen de rainures et nervures complémentaires, et présente une surface de frottement 74 adaptée pour venir au contact d'une surface de frottement 48 du bloc cylindres 4, la mise en contact de ces surfaces 48 et 74 entrainant ainsi des frottements permettant de réaliser une synchronisation du bloc cylindres 4 avec le couvercle de distributeur 52.

La seconde partie mobile 73 est montée coulissante sur la première partie mobile 72, par exemple également au moyen de rainures et nervures complémentaires, et est adaptée pour s'engager avec des nervures et rainures complémentaires aménagées sur le bloc cylindres 4 une fois que ce dernier est synchronisé avec le couvercle de distributeur 52.

Une butée à bille 75 permet de ne libérer la seconde partie mobile 73 en translation qu'une fois que la synchronisation entre le couvercle de distributeur 52 et le bloc cylindres 4 est réalisée du fait de l'engagement des surfaces de frottement 74 et 48. En effet, un engagement de type crabot tel que réalisé par cette seconde partie mobile 73 est avantageusement réalisé en statique, c'est-à-dire lorsque les deux éléments concernés sont immobilisés l'un par rapport à l'autre.

Les moyens d'engagement 7 permettent ainsi, lors de l'application d'une commande, de lier le bloc cylindre 4 et le couvercle de distributeur 52 en rotation avec le premier ensemble, c'est-à-dire l'ensemble ne comprenant pas la came 3.

Les moyens d'engagement 7 peuvent comprendre en outre une rainure périphérique 741 permettant son déplacement via un levier ou tout autre système s'y engageant.

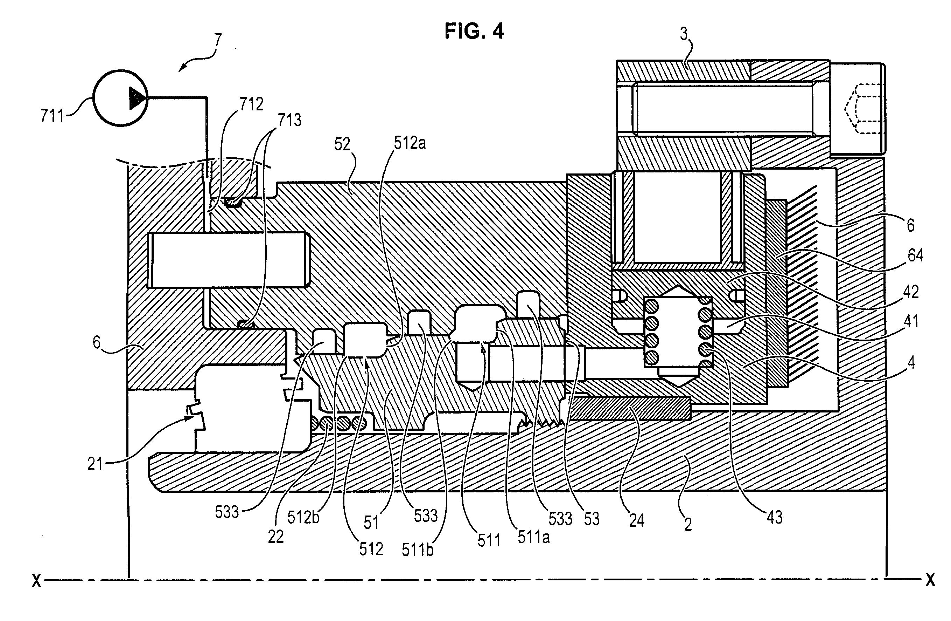

La figure 4 présente une autre variante d'un appareil hydraulique 1 selon l'invention, dans laquelle les moyens d'engagement 7 sont une source d'alimentation en pression adaptée pour appliquer une pression sur une surface adaptée du couvercle de distributeur 52, et appliquer une pression sur le bloc cylindres 4 et ainsi lier en rotation le bloc cylindre 4 avec la pièce 6.

La source d'alimentation en pression est ici représentée schématiquement comme une pompe hydraulique 711, pouvant par exemple être une pompe de gavage, adaptée pour alimenter en pression un volume 712 localisé entre le carter 6 et le couvercle de distributeur 52, et ainsi appliquer une pression sur ce dernier de manière à le déplacer vers le bloc cylindres 4, qui vient en appui contre un patin de frottement 64 lié au carter 6, la pression appliquée dans le volume 712 étant adaptée pour réaliser une immobilisation du bloc cylindres 4 par rapport au carter 6 du fait des frottements entre le bloc cylindres 4 et le patin de frottement 64.

Le couvercle de distributeur 52 et/ou le carter 6 comprennent avantageusement des moyens d'étanchéité 713 assurant l'étanchéité du volume 712 dans lequel la pression est appliquée.

Les moyens d'engagement 7 permettent de lier le bloc cylindre 4 en rotation avec le premier ensemble lors de l'application d'une commande, c'est-à-dire l'ensemble ne comprenant pas la came 3.

Selon un autre mode de réalisation de cette variante, le patin de frottement est disposé à l'interface entre le bloc cylindres 4 et le couvercle de distributeur 52, tandis que le bloc cylindres 4 est en appui sur un patin de glissement disposé sur l'arbre 2. L'application de la pression au sein du volume 712 entraine alors une immobilisation du bloc cylindres 4 par rapport au couvercle de distributeur 52, et donc par rapport au carter 6 du fait des frottements entre le bloc cylindres 4 et le patin de frottement du couvercle de distributeur 52.

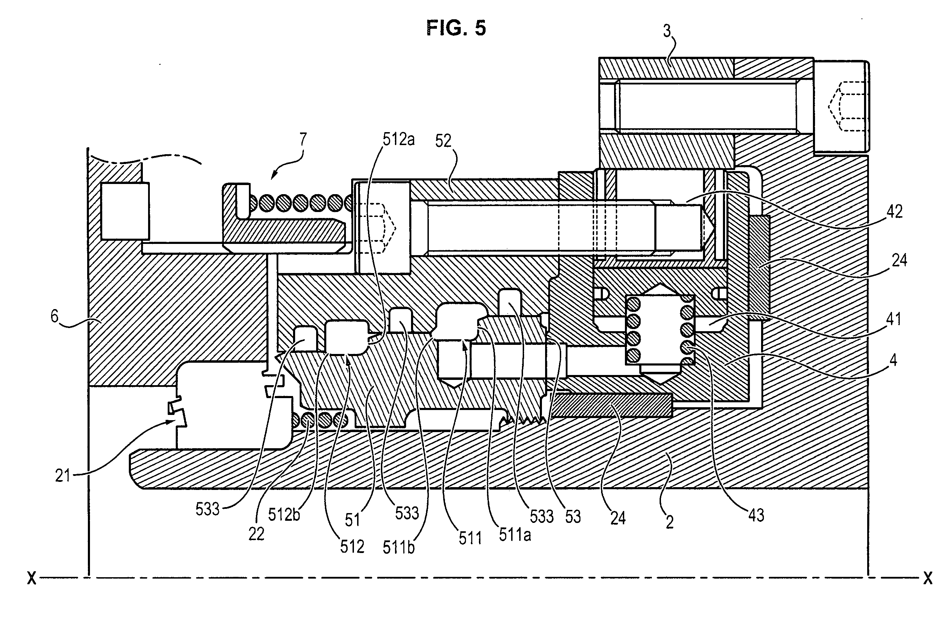

La figure 5 présente une autre variante d'un appareil hydraulique 1 selon l'invention tel que présenté précédemment sur la figure 2.

Dans cette variante, le couvercle de distributeur 52 est lié en rotation au bloc cylindres 4 via un élément d'indexation, par exemple une vis ou un boulon, et monté libre en rotation par rapport au carter 6.

On définit ainsi deux ensembles mobiles en rotation l'un par rapport à l'autre :
- un premier ensemble défini par le carter 6, et
- un second ensemble défini par l'arbre 2, la came 3 et le distributeur 51, lesdits premier et second ensembles étant libres en rotation l'un par rapport à l'autre.

Le bloc cylindres 4 et le couvercle de distributeur 52 sont montés tournant par rapport à ces deux ensembles.

Les moyens d'engagement 7 sont ici un dispositif à crabot tel que décrit précédemment, c'est-à-dire un dispositif à dents et rainures aménagées sur les moyens d'engagement 7 coopérant avec des dents et rainures aménagées sur le carter 6 et sur le couvercle de distributeur 52.

Les moyens d'engagement 7 permettent de lier le bloc cylindre 4 et le couvercle de distributeur 52 en rotation avec le premier ensemble, c'est-à-dire l'ensemble ne comprenant pas la came 3 lors de l'application d'une commande.

La figure 6 présente une vue partielle en coupe d'une variante autre d'appareil hydraulique selon un aspect de l'invention.

Dans cette variante, l'arbre 2 est lié en rotation à la came 3.

Le distributeur 51 est monté fixe en rotation sur l'arbre 2, autour de l'arbre 2, typiquement au moyen de cannelures aménagées en surface de l'arbre 2 coopérant avec des nervures réalisées dans un alésage du distributeur 51.

Le couvercle de distributeur 52 est quant à lui monté tournant autour du distributeur 51, et est lié en rotation au carter 6.

Comme dans les modes de réalisation précédents, le bloc cylindres 4 est disposé de manière à ce que les pistons 42 soient dans l'anneau formant la came 3, et soient maintenus en contact avec la came 3 au moyen du ressort 43.

Le bloc cylindres 4 est ici associé à un porte disques 44 auquel il est lié en rotation, ce porte disques 44 comprenant une pluralité de disques 45 régulièrement espacés.

Le couvercle de distributeur 52 comprend par ailleurs également une pluralité de disques complémentaires 54 qui sont disposés de manière alternée avec les disques 45 du porte disques 44.

Ces deux groupes de disques 45 et 54 ont un fonctionnement similaire à des disques de frein conventionnels ; ils sont configurés pour alterner entre une configuration dans laquelle ils ne sont pas en contact et laissent ainsi le couvercle de distributeur 52 et le bloc cylindres 4 libres en rotation l'un par rapport à l'autre, et une configuration dans laquelle ils sont en contact et immobilisent ainsi le couvercle de distributeur 52 et le bloc cylindres 4 l'un par rapport à l'autre sous l'effet de frottements.

Un élément d'appui 8 est ici disposé autour de l'arbre 2, entre l'arbre 2 et le distributeur 51. Les moyens d'engagement sont liés en rotation à l'arbre 2 et le distributeur 51, typiquement au moyen de nervures et de cannelures, et est mobile en translation selon l'axe X-X.

L'élément d'appui 8 comprend un ressort de poussée 82 positionné de manière à réaliser un effort de poussée du distributeur 51 contre le bloc cylindres 4, réalisant ainsi un appui étanche entre le distributeur 51 et le bloc cylindres 4.

Une rondelle 83 élastique est positionnée en appui sur l'arbre 2 et agit sur l'élément d'appui 8 en opposition à l'effort de poussée exercé par le ressort de poussée 82, permettant ainsi de réaliser le retour à la position désengagée des disques 45 et 54, c'est-à-dire la position du système dans laquelle le bloc cylindres 4 est libre en rotation par rapport du distributeur 51, et donc par rapport au carter 6. La rondelle 83 et le ressort de poussée 82 sont configurés de manière à maintenir l'appui étanche entre le distributeur 51 et le bloc cylindres 4, que l'appareil hydraulique soit alimenté en pression ou non.

On comprend bien que la rondelle 83 et le ressort de poussée 82 peuvent être remplacés par d'autres moyens élastiques adaptés.

En fonctionnement, l'alimentation en pression va tendre à déplacer le distributeur 51 vers le bloc cylindres 4 sous l'effet de l'effort résultant de la pression appliquée à ces parois 511a et 512a comme décrit précédemment. Le distributeur 51 étant en appui contre le bloc cylindres 4, ce dernier va également être déplacé dans le même sens, c'est-à-dire dans le sens d'un éloignement par rapport au couvercle de distributeur 52. Ce déplacement relatif du bloc cylindres 4 par rapport au couvercle de distributeur 52 va ainsi entrainer l'engagement des disques 45 et 54, et ainsi lier en rotation le bloc cylindres 4 par rapport à l'ensemble comprenant le carter 6 et le couvercle de distributeur 52, réalisant ainsi la mise en service de l'appareil hydraulique 1.

Afin de désengager l'appareil hydraulique, c'est-à-dire de le mettre dans une configuration dans laquelle le débit est nul, il suffit donc de cesser de l'alimenter en pression ; ainsi lorsque la pression appliquée sur les parois 511a et 512a du distributeur 51 atteint une valeur seuil donnée, les disques 54 et 45 se désengagent, libérant ainsi en rotation le bloc cylindres 4 par rapport au couvercle de distributeur 52 et au carter 6.

Les moyens d'engagement sont donc ici formés par la combinaison des disques 45 et 54 et de l'élément d'appui 8, assurant l'engagement ou non en rotation de bloc cylindres 4 par rapport au carter 6 et au couvercle de distributeur 52.

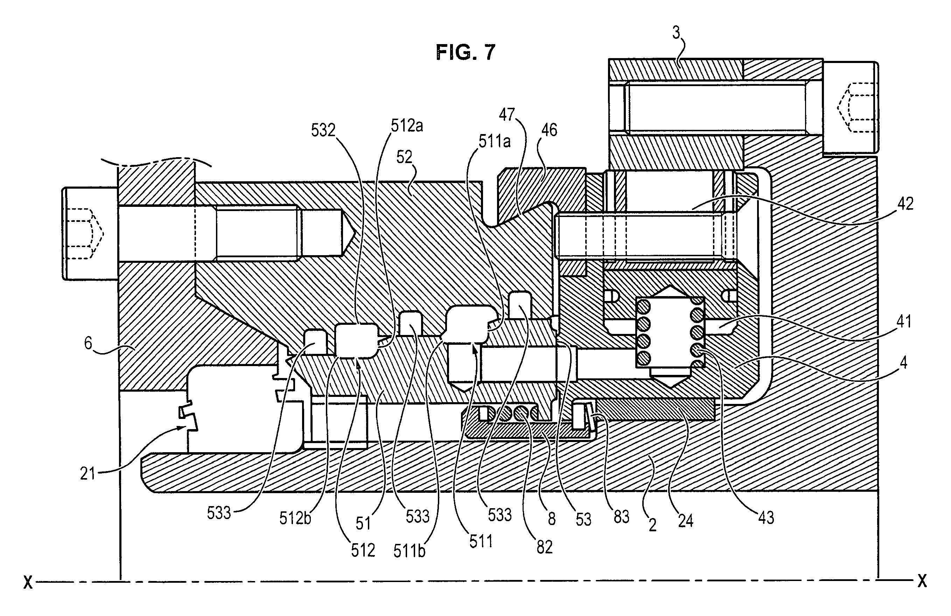

La figure 7 présente une autre variante d'appareil hydraulique selon un aspect de l'invention.

Cette variante présente un fonctionnement similaire à celle présentée sur la figure 6, dans laquelle les disques 45 et 54 ont été remplacés par deux demi coques coniques 46 et 47 liées en rotation respectivement au bloc cylindres 4 et au couvercle de distributeur 52.

Ces deux demi coques coniques 46 et 47 sont configurées de manière à ce que lorsque le bloc cylindres 4 et le couvercle de distributeur 52 sont déplacés dans le sens d'un éloignement l'un par rapport à l'autre, les surfaces de ces deux demi coques coniques 46 et 47 s'engagent par frottement, et lient ainsi en rotation le bloc cylindres 4 et le couvercle de distributeur 52.

Comme pour le mode de réalisation présenté sur la figure 6, l'alimentation en pression va tendre à déplacer le distributeur 51 vers le bloc cylindres 4 sous l'effet de l'effort résultant de la pression appliquée à ces parois 511a et 512a comme décrit précédemment. Le distributeur 51 étant en appui contre le bloc cylindres 4, ce dernier va également être déplacé dans le même sens, c'est-à-dire dans le sens d'un éloignement par rapport au couvercle de distributeur 52. Ce déplacement relatif du bloc cylindres 4 par rapport au couvercle de distributeur 52 va ainsi entraîner l'engagement des deux demi coques coniques 46 et 47, et ainsi lier en rotation le bloc cylindres 4 par rapport à l'ensemble comprenant le carter 6 et le couvercle de distributeur 52, réalisant ainsi la mise en service de l'appareil hydraulique 1.

Afin de désengager l'appareil hydraulique, il suffit donc de cesser de l'alimenter en pression ; ainsi lorsque la pression appliquée sur les parois 511a et 512a du distributeur 51 atteint une valeur seuil donnée, les deux demi coques coniques 46 et 47 se désengagent, libérant ainsi en rotation le bloc cylindres 4 par rapport au couvercle de distributeur 52 et au carter 6.

Comme dans le mode de réalisation précédent, les moyens d'engagement sont donc ici formés par la combinaison des deux demi coques coniques 46 et 47 et de l'élément d'appui 8, assurant l'engagement ou non en rotation de bloc cylindres 4 par rapport au carter 6 et au couvercle de distributeur 52.

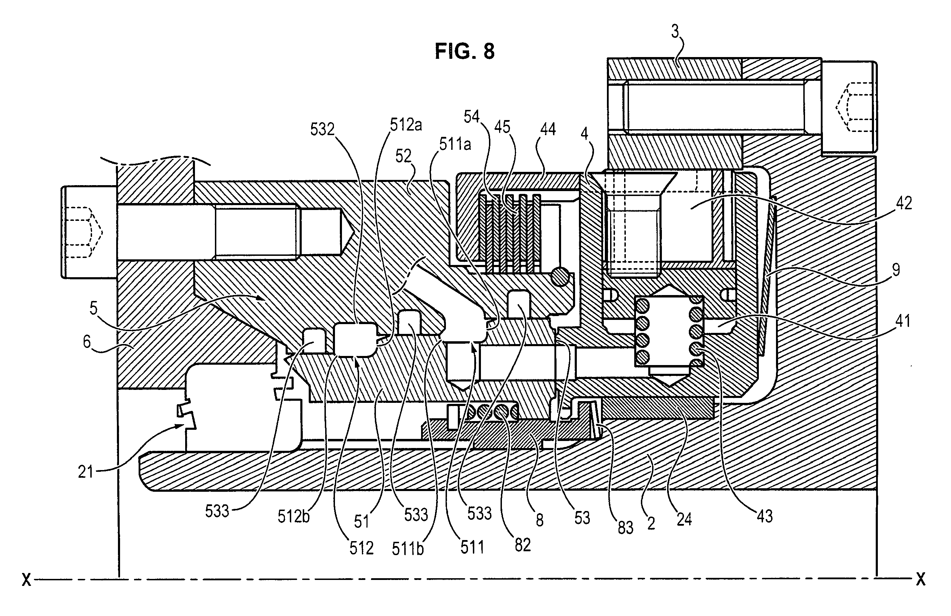

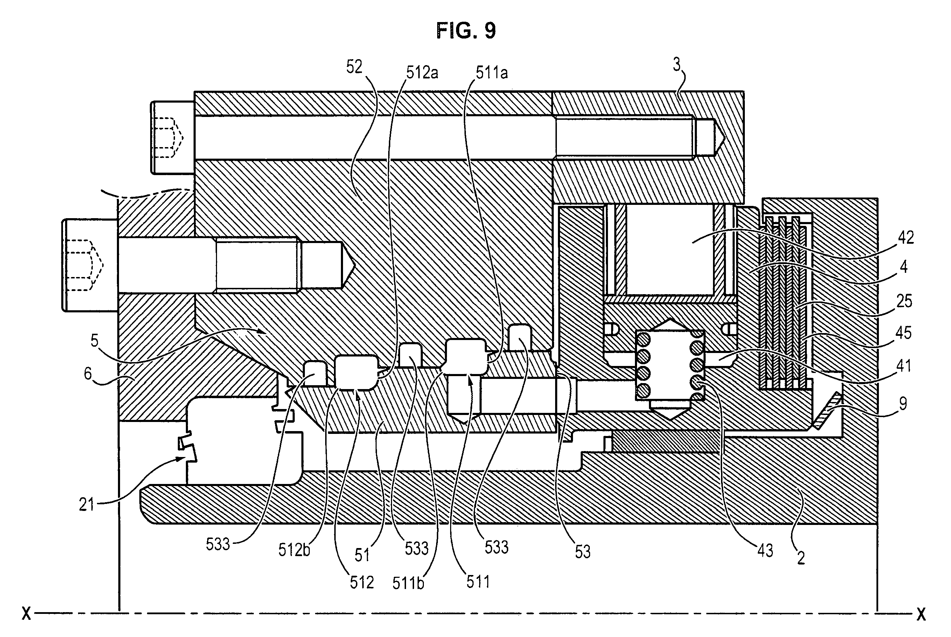

Les figures 8 et 9 illustrent deux autres variantes présentant un fonctionnement similaire à celui présenté en référence aux figures 6 et 7.

La figure 8 présente une variante de la figure 6 dans laquelle l'élément d'appui 8, le ressort de poussée 82 et la rondelle 83 ont été supprimés.
Un moyen de rappel 9 est disposé de manière à tendre à déplacer le bloc cylindres 4 pour le désengager en rotation par rapport au couvercle de distributeur 52 et au carter 6, en désengageant les disques 45 du bloc cylindres des disques complémentaires 54 du couvercle de distributeur 52, c'est-à-dire en désengagement l'embrayage existant entre le bloc cylindres 4 et le carter 6 formé par les disques 45 et 54.
Dans le mode de réalisation représenté, le moyen de rappel 9 est un ressort de poussée de type rondelle, communément désigné sous l'appellation rondelle Belleville.

De plus, le moyen de rappel 9 assure un maintien du bloc cylindres 4 au contact du distributeur 51, et réalise donc l'étanchéité entre ces deux pièces permettant ainsi de réaliser la mise en fonctionnement de l'appareil hydraulique 1 par alimentation des pistons 42 du bloc cylindres 4.

Comme déjà présenté en référence aux figures précédentes, le distributeur 51 telle que représentée comprend des rainures 511 et 512 pour l'acheminement du fluide, qui coopèrent avec des rainures 521 et 522 aménagées dans le couvercle de distributeur 52 afin de former des canaux.

Des rainures 523 encadrant les canaux ainsi formés sont aménagées dans le couvercle de distributeur 52, ces rainures formant des logements adaptés pour recevoir des éléments d'étanchéité dynamiques.

Les rainures 511 et 512 aménagées dans le distributeur 51 sont avantageusement réalisées de manière à présenter chacune deux parois latérales 511a, 511b, 512a et 512b, ces parois latérales étant réalisées de sorte que pour chacune des rainures 511 et 512, la paroi latérale qui est la plus proche du bloc cylindres 4 présente une surface supérieure à celle qui en est la plus éloignée.

En référence au mode de réalisation présenté sur la figure 8, les parois latérales 511a et 512a présentent une surface supérieure aux surfaces 511b et 512b. Le diamètre du distributeur 51 va en croissant au fur et à mesure que l'on se rapproche de sa surface de contact avec le bloc cylindres 4. Le distributeur 51 peut ainsi être qualifié de distributeur étagé.

Ainsi, l'alimentation en fluide sous pression va tendre à déplacer le distributeur 51 vers le bloc cylindres 4 sous l'effet de l'effort résultant de la pression appliquée à ces parois 511a et 512a.

Cette configuration particulière des rainures 511 et 512 permet ainsi d'assurer un auto-maintien de l'étanchéité entre le bloc cylindres 4 et le distributeur 51. Le distributeur 51 est lié en rotation à l'arbre 2 ; le distributeur 51 est ainsi solidaire en rotation avec la came 3 dans la mesure où cette dernière est solidaire en rotation de l'arbre 2, pour permettre de synchroniser l'alimentation des pistons sur le profil de came.

Une fonction similaire peut être réalisée en aménageant dans le distributeur 51, une chambre de poussée, aménagée de manière à ce que son alimentation en pression entraine un déplacement du distributeur 51 vers le bloc cylindres 4.

Lors de l'alimentation en fluide, le déplacement du distributeur 51 vers le bloc cylindres 4 sous l'effet de l'effort résultant de la pression appliquée aux parois 511a et 512a entraine un engagement des disques 45 et 54, liant ainsi en rotation le bloc cylindres 4 au carter 6 et réalisant la mise en cylindrée de l'appareil hydraulique 1.

Les moyens d'engagement 7 sont donc ici formés par
- la combinaison des disques 45 et 54 formant un embrayage entre le bloc cylindres 4 par l'intermédiaire du porte disques 44 et le carter 6 par l'intermédiaire du couvercle de distributeur 52),
- le moyen de rappel 9, et
- la configuration du distributeur 51 entrainant un déplacement du distributeur 51 vers le bloc cylindres 4 lors de l'application d'une pression.

La figure 9 présente un autre mode de réalisation dans lequel le bloc cylindres 4 est adapté pour être lié en rotation à l'arbre 2 lors de l'application d'une commande; le bloc cylindres 4 comprend une pluralité de disques 45 adaptés pour coopérer avec une pluralité d'autres disques 25 liés à l'arbre 2.

Le fonctionnement est similaire à celui du mode de réalisation présenté sur la figure 8.

En l'absence d'alimentation en pression par le distributeur 51, le moyen de rappel 9, représenté ici comme une rondelle Belleville, maintient le bloc cylindres 4 en appui contre le distributeur 51, et désengage les disques 45 et 25 formant l'embrayage entre le bloc cylindres 4 et l'arbre 2.

Lors de l'alimentation en fluide, la structure étagée du distributeur 51 entraine un déplacement du distributeur 51 vers le bloc cylindres 4, et un engagement des disques 45 et 25, liant ainsi en rotation le bloc cylindres 4 à l'arbre 2 et réalisant la mise en cylindrée de l'appareil hydraulique 1.

Une telle structure à came 3 fixe est avantageuse en termes d'usure ; lorsque l'appareil hydraulique 1 n'est pas en fonctionnement, la came 3, le bloc cylindres 4, le distributeur 51 et le couvercle de distributeur 52 sont immobiles, ce qui évite notamment l'usure des éléments d'étanchéités entre ces pièces.

Plusieurs autres types de moyens de rappel 9 peuvent être utilisés. On peut notamment citer l'utilisation d'un patin de frottement avec un ou plusieurs ressorts de compression, un élément tirant associé à un ressort de compression monté en appui sur le distributeur 5. Le moyen de rappel 9 peut également être monté en appui sur un autre élément de l'appareil hydraulique 1, dès lors qu'il réalise un maintien du bloc cylindres 4 contre le distributeur 51.

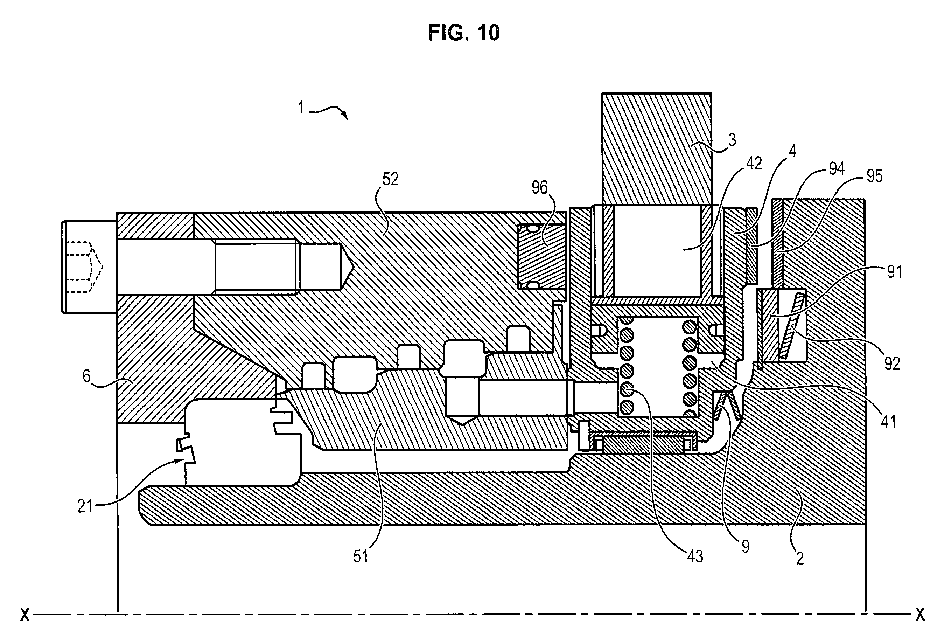

La figure 10 présente un autre mode de réalisation dans lequel le bloc cylindres 4 est adapté pour être lié en rotation à l'arbre 2 lors de l'application d'une commande.

Dans ce mode de réalisation, la liaison en rotation entre le bloc cylindres 4 et l'arbre 2 est réalisée par un élément de synchronisation en rotation et par des dentures.

L'élément de synchronisation tel que présenté est un piston de synchronisation 91, lié en rotation à l'arbre 2 par exemple au moyen de cannelures. Le piston de synchronisation 91 est monté coulissant selon l'axe X-X, et est couplé à une rondelle 92 disposée en appui sur l'arbre 2 réalisant une fonction de ressort entre l'arbre 2 et le piston de synchronisation 91.

Le bloc cylindres 4 et l'arbre 2 ont chacun des cannelures, respectivement 94 et 95, disposées de manière à s'engager lorsque le bloc cylindres est déplacé selon l'axe X-X de manière à venir en butée sur l'arbre 2.

Le déplacement du bloc cylindres 4 selon l'axe X-X est typiquement réalisé sous l'effet de l'alimentation en fluide du distributeur 51 qui entraine un effort de poussée du distributeur 51 sur le bloc cylindres 4. Le mode de réalisation représenté comprend en outre un piston d'actionnement 96 adapté pour réaliser un effort de poussée sur le bloc cylindres 4 et ainsi en assurer le déplacement conjointement avec l'effet de l'alimentation en fluide du distributeur 51.

Le bloc cylindres 4 comprend un ou plusieurs logements en forme de secteurs angulaires disposés en regard du piston de synchronisation 91. Le contact entre le piston 91 et le bloc cylindre se fait par frottement, de sorte que le contact entre le bloc cylindres 4 et le piston de synchronisation 91 entraine un engagement en rotation du bloc cylindres 4 par rapport au piston de synchronisation 91 et donc par rapport à l'arbre 2.

La forme de secteurs angulaires des logements permet un engagement en rotation du bloc cylindres 4 par rapport au piston de synchronisation 91 tout en permettant un débattement angulaire entre ces deux éléments.

De cette manière, on définit deux positions de butée du piston de synchronisation 91 sur le bloc cylindres 4 contre deux parois distinctes des logements, en fonction du sens de rotation de la partie tournante de l'appareil hydraulique 1.

Ces deux positions de butée permettent ainsi d'aligner les conduits internes du bloc cylindres 4 et du distributeur 51 dans leur configuration appropriée selon le sens de fonctionnement de l'appareil hydraulique 1, c'est-à-dire le sens de rotation de sa partie tournante.

Une fois ce premier engagement en rotation effectué, le bloc cylindres 4 poursuit son déplacement selon l'axe X-X jusqu'à ce que les cannelures 94 et 95 du bloc cylindres 4 et de l'arbre 2 respectivement s'engagent, formant ainsi un engagement par crabot entre le bloc cylindres 4 et l'arbre 2. La rondelle 92 permet la translation du piston de synchronisation 91 avec le bloc cylindres 4 selon l'axe X-X.

La mise en cylindrée est donc réalisée en deux temps, lors du déplacement du bloc cylindres 4 selon l'axe X-X ;
- dans un premier temps, on réalise un engagement flottant du bloc cylindres 4 de manière à positionner ses conduits internes dans la configuration souhaitée, et à réaliser la synchronisation en vitesse qui évite le bruit d'engagement des dents des liaisons crabot, puis
- dans un second temps, on verrouille cet engagement flottant du bloc cylindres 4 par un engagement de type crabot avec l'arbre 2.

La mise en cylindrée est ainsi adaptée au sens de fonctionnement de l'appareil hydraulique 1 du fait de l'engagement flottant du bloc cylindres 4 qui permet un positionnement des conduits internes adapté au sens de rotation de l'appareil hydraulique 1.

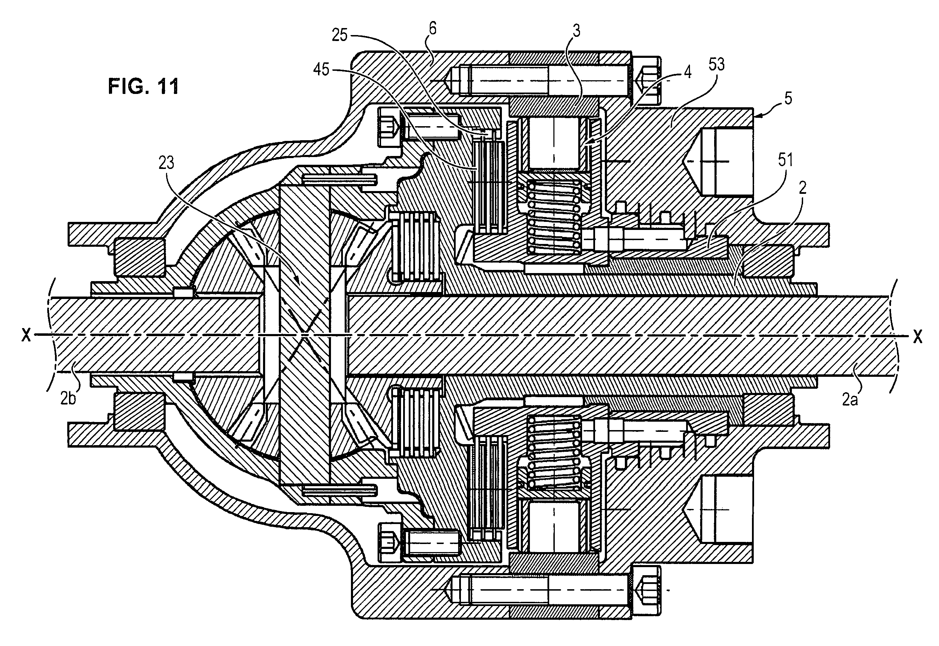

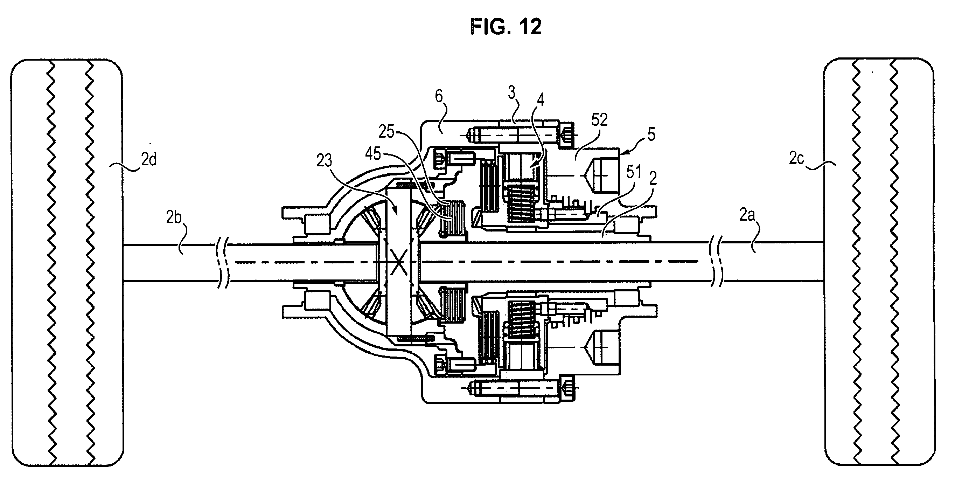

Les figures 11 et 12 illustrent une structure présentant un fonctionnement tel que décrit en référence à la figure 9, intégrée dans un ensemble comprenant un différentiel lié à deux demi-arbres entrainant des roues.

Dans ce mode de réalisation, le carter 6 est fixe, et l'appareil hydraulique 1 est associé à un différentiel 23 disposé dans le carter 6. La came 3, le distributeur 51 et le couvercle de distributeur 52 sont ici liés en rotation au carter 6, l'arbre 2 étant tournant.

Le différentiel 23 monté sur l'arbre 2 de l'appareil hydraulique 1, et est relié à deux demi-arbres 2a et 2b pouvant tourner à des vitesses distinctes. Le corps (communément appelé cage) du différentiel 23 est lié en rotation à l'arbre 2.

Cette variante trouve une application par exemple pour réaliser une assistance sur un essieu d'un véhicule, les deux demi-arbres 2a et 2b étant chacun liés à une roue, respectivement 2c et 2d. Il suffit alors d'enclencher une pompe afin d'alimenter l'appareil hydraulique 1 de manière à ce que ce dernier s'engage et fonctionne en moteur pour réaliser une assistance hydraulique sur l'arbre 2, en l'occurrence un essieu de véhicule.

Ces différentes variantes comprenant un distributeur 51 étagé et un moyen de rappel 8 ou 9 assurant un contact étanche entre le bloc cylindres 4 et le distributeur 51 permettant ainsi d'obtenir un système compact et robuste en limitant l'utilisation de moyens d'étanchéité dynamiques.

L'engagement en rotation du bloc cylindres 4 se fait de manière progressive ; plus la pression délivrée par le distributeur 51 est élevée, plus la force de frottement entre les disques 45 de l'embrayage du bloc cylindres 4 et les disques complémentaires 54 ou 25 est élevée.

De manière plus générale, en considérant un appareil hydraulique 1 selon un aspect de l'invention, on définit ainsi deux ensembles mobiles en rotation l'un par rapport à l'autre :
- un premier ensemble défini par le carter 6, et
- un second ensemble défini par l'arbre 2, lesdits premier et second ensembles étant libres en rotation l'un par rapport à l'autre.

Le bloc cylindres 4 est monté libre en rotation par rapport auxdits premier et second ensembles.

La came 3 est liée en rotation à l'un ou l'autre de ces ensembles ; par exemple au premier ensemble dans le mode de réalisation représenté sur la figure 1, et au second ensemble dans le mode de réalisation représenté sur la figure 2.

Les moyens d'engagement 7 permettent de réaliser une immobilisation du bloc cylindres 4 par rapport à l'autre desdits premier ou second ensembles lors de l'application d'une commande, par exemple l'alimentation en pression de l'appareil hydraulique 1 ou l'engagement d'un actionneur, de sorte que le bloc cylindres 4 et la came 3 soient chacun liés en rotation à un ensemble distinct, ce qui réalise la mise en cylindrée de l'appareil hydraulique.

Les moyens d'engagement 7 peuvent agir directement sur le bloc cylindres 4 comme par exemple dans le mode de réalisation représenté sur la figure 1 où les moyens d'engagement viennent directement au contact du bloc cylindres 4 afin de l'immobiliser en rotation, ou indirectement via une action effectuée sur un autre élément, comme par exemple le couvercle de distributeur 52 dans le mode de réalisation représenté sur la figure 2 ou le distributeur 51 dans le mode de réalisation présenté sur la figure 1.

L'immobilisation du bloc cylindres 4 par rapport à l'un ou l'autre des ensembles est avantageusement réalisée de manière progressive, par exemple par application progressive de l'effort de mise en contact afin de réaliser une mise en service progressive sans à-coup.

Les moyens d'engagement 7 peuvent notamment être actionnés par une pompe de gavage d'un circuit hydraulique associé à l'appareil hydraulique.

Par ailleurs, les ressorts 43 appliquant les pistons 42 sur la came 3 impliquent que l'appareil hydraulique 1 est autoaspirant comme déjà détaillé précédemment en référence à la figure 1, c'est-à-dire qu'on peut utiliser cet appareil hydraulique 1 comme pompe sans nécessiter de le coupler à une pompe de gavage pour éviter le risque de cavitation.

En effet, dès que le bloc cylindre tourne 4 par rapport à la came 3, une aspiration se produit du fait du contact entre les pistons 42 et la came 3 qui annule ainsi le risque de cavitation.

L'invention permet ainsi de réaliser une mise en service de l'appareil hydraulique 1 à vitesse non nulle et à débit nul. On passe ainsi d'une configuration désengagée dans laquelle le débit est nul, à une configuration dans laquelle la rotation relative des deux ensembles entraine un débit de fluide.

Contrairement aux appareils hydrauliques selon l'état de la technique, il n'est pas nécessaire de réaliser des phases transitoires de montée en pression progressive afin de réaliser la sortie des pistons et la mise en pression de la boucle fermée du circuit hydraulique associé ou des carters.

En effet, la mise en service peut être réalisée progressivement jusqu'à l'immobilisation du bloc cylindres 4 par rapport à l'un ou l'autre des ensembles par exemple sous l'effet de frottements, cette immobilisation pouvant alors dans certaines variantes être doublée au moyen d'un crabot ou de tout autre moyen de verrouillage adapté.

La pompe de gavage est ainsi optionnelle et le cas échéant minimisée, sa fonction étant limitée à la compensation d'éventuelles fuites.

L'invention trouve une application particulière sur les circuits d'assistance hydraulique de véhicules, par exemples les camions, véhicules agricoles ou engins de chantier, ou encore sur les véhicules utilitaires, voire les automobiles. Dans le cas d'un appareil hydraulique 1 à carter 6 tournant et à arbre 2 fixe tel que décrit précédemment, l'appareil hydraulique 1 est alors typiquement disposé de manière à ce que sa partie fixe forme une fusée de roue, le carter tournant étant lié à la roue.

La mise en service de l'appareil hydraulique 1 permet ainsi typiquement de passer d'une transmission de type traction ou propulsion à une transmission de type 4x4. Par exemple, dans le cas d'un véhicule à 4 roues ayant un moteur principal entrainant ses roues avant, on peut avantageusement équiper les roues arrière de tels appareils hydrauliques 1 et ainsi passer en transmission 4x4 lors de la mise en service de ces appareils hydrauliques.

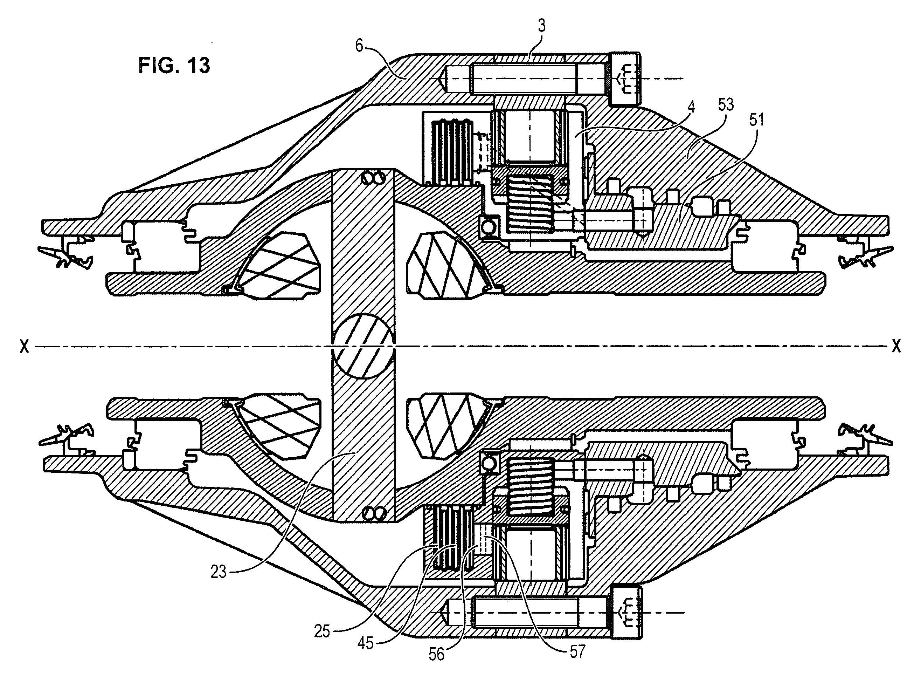

La figure 13 présente une autre variante d'utilisation d'un appareil hydraulique selon un aspect de l'invention.

Les disques 45 et 25 sont ici disposés dans une chambre étanche 56 à pression commandée au moyen d'une chambre de commande 57.

La chambre de commande 57 est reliée aux conduits du distributeur 51. La chambre étanche 56 est remplie d'huile.

La chambre de commande 57 est configurée de manière à permettre de piloter la pression au sein de la chambre étanche 56, permettant ainsi de modifier la viscosité de l'huile dans la chambre étanche 56. L'augmentation de la viscosité de l'huile dans la chambre étanche 56 réalise un engagement des disques 45 et 25 par visco-couplage. En l'absence de l'application d'une pression par la chambre de commande 57, l'huile au sein de la chambre étanche 56 a une viscosité faible et ne réalise donc pas l'engagement des disques 45 et 25.

Une commande de roue libre, par exemple une rondelle ressort, est disposée de manière à permettre de relâcher la pression au sein de la chambre étanche 56 et ainsi de passer l'appareil hydraulique 1 en configuration de roue libre.

Cet engagement par visco-couplage présente plusieurs avantages. Il réalise une fonction d'embrayage sans friction, réduisant donc l'usure par rapport à un embrayage conventionnel de type crabot. Le risque de bruit lors de l'embrayage est également réduit.

Selon une application particulière, on réalise un montage en chaine de plusieurs appareils hydrauliques 1 selon l'invention sur un véhicule.

On monte ainsi un premier appareil hydraulique sur un essieu de roue, et un second appareil hydraulique sur un essieu d'entrainement lié à un moteur tel qu'un moteur thermique du véhicule. Lorsque l'on souhaite activer l'assistance hydraulique, il suffit alors de mettre en service les deux appareils hydrauliques, le second appareil hydraulique ayant alors un fonctionnement de pompe de manière à alimenter le premier appareil hydraulique qui fonctionne en moteur et entraine l'essieu de roue associé.

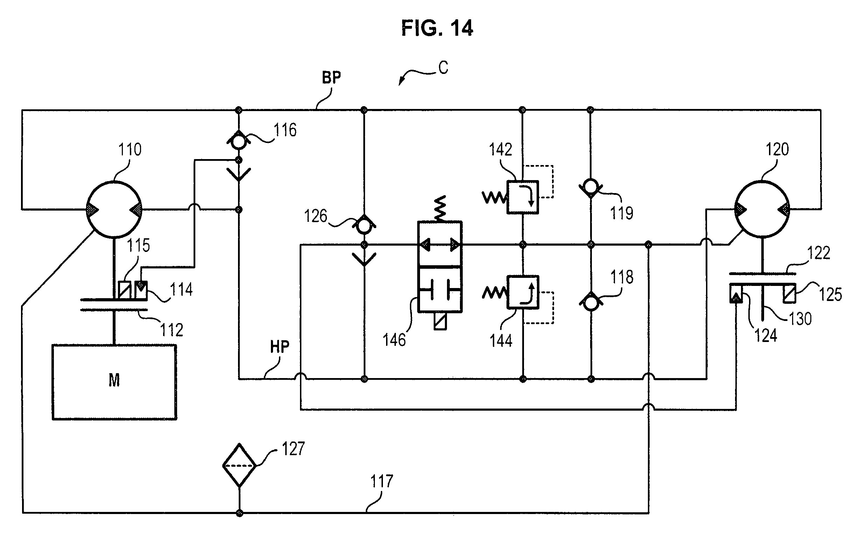

La figure 14 présente un mode de réalisation d'un tel montage.

Ce montage comprend un circuit hydraulique C comprenant deux appareils hydrauliques 110 et 120 fonctionnant respectivement en pompe et en moteur.

Ces deux appareils hydrauliques 110 et 120 sont chacun couplés à un embrayage, respectivement 112 et 122.

L'embrayage 112 réalise le couplage de la pompe 110 avec un bloc moteur M, typiquement un moteur thermique pouvant être associé à une boîte de vitesse.

L'embrayage 122 réalise le couplage du moteur hydraulique 120 avec un arbre 130, par exemple un essieu de véhicule.

Dans le mode de réalisation représenté, les embrayages 112 et 122 sont pilotés par des commandes hydrauliques respectivement 114 et 124, adaptées pour enclencher l'embrayage associé lorsqu'une pression de commande est appliquée, et le désengager lorsque la pression appliquée est inférieure à une valeur seuil donnée.

Ces commandes hydrauliques 114 et 124 sont chacune doublées d'une commande primaire, respectivement 115 et 125, les embrayages 112 et 122 pouvant chacun être enclenchés soit par une unique commande primaire ou hydraulique, soit par un effet combiné des deux commandes. Dans le mode de réalisation illustré, les commandes primaires 115 et 125 sont des commandes électriques, étant entendu que d'autres variantes sont possibles, notamment au moyen de commandes pneumatiques, mécaniques ou encore hydrauliques.

Le circuit hydraulique C présente une ligne reliant l'admission de la pompe hydraulique 110 au refoulement du moteur hydraulique 120, et une ligne reliant le refoulement de la pompe hydraulique 110 à l'admission du moteur hydraulique 120. Afin d'illustrer un exemple de fonctionnement, on désignera ces lignes respectivement par BP et HP correspondant à la ligne basse pression et à la ligne haute pression du circuit C.

Le circuit C tel que représenté comprend deux clapets navette 116 et 126, reliant chacun la ligne HP à la ligne BP, et délivrant une pression respectivement aux commandes hydrauliques 114 et 124.

Ces clapets navette 116 et 126 sont configurés de manière à prélever la pression la plus élevée parmi les deux lignes HP et BP, en l'occurrence la ligne haute pression reliée au refoulement de la pompe hydraulique 110 et l'acheminer à leurs commandes hydrauliques 114 et 124 respectives.

Le circuit hydraulique C comprend en outre des valves de surpression 142 et 144 adaptées pour permettre l'évacuation du fluide dans le circuit C, ces valves de surpression étant reliées respectivement à la ligne BP et à la ligne HP, et étant configurées de manière à être passantes lorsque la pression dans la ligne à laquelle elles sont reliées dépasse une valeur seuil.

Ces deux valves de surpression sont reliées à un distributeur 146 réalisant une fonction d'interrupteur afin de permettre ou non la vidange des lignes HP et/ou BP.

En outre, les appareils hydrauliques 110 et 120 ont leurs carters respectifs reliés entre eux par une même ligne de drain 117, elle-même reliée aux lignes HP et BP respectivement par des clapets anti-retour 118 et 119.

Cette ligne de drain commune 117 permet de réaliser un équilibrage entre la pression dans les carters des appareils hydrauliques 110 et 120 avec la ligne haute pression HP pour réaliser le désengagement de l'appareil hydraulique. Elle permet également de réaliser une aspiration des fuites des appareils hydrauliques 110 et 120 vers le circuit hydraulique C ; les clapets anti-retour 118 et 119 réalisant une fonction de réalimentation du circuit hydraulique C, permettant ainsi de réaliser un système auto-aspirant ne nécessitant pas de moyens de gavage.

La ligne de drain 117 comprend en outre typiquement un reniflard 127, ou système d'évacuation des vapeurs d'huile vers le milieu extérieur.

Dans un montage comprenant en outre une boîte de vitesse, la ligne de drain 117 est alors avantageusement également reliée au carter de cette boîte de vitesse, ce qui permet d'obtenir un système ayant une ligne de drain typiquement munie d'un unique reniflard pour la boîte de vitesse et les appareils hydrauliques. Le drain réalise alors une réserve pour l'alimentation en en huile des deux appareils hydrauliques.

En fonctionnement, on considère un état initial où les deux embrayages 112 et 122 sont désengagés ; la pompe hydraulique 110 et le moteur hydraulique 120 sont donc désengagés et le débit dans le circuit hydraulique est nul.

Pour mettre en route l'assistance hydraulique sur l'arbre 130, on actionne la commande primaire 115 de l'embrayage 112 de manière à coupler la pompe hydraulique 110 au moteur M, et ainsi faire établir un débit dans le circuit C par la pompe hydraulique 110, qui définit alors les lignes haute pression HP et basse pression BP en fonction de son sens de fonctionnement.

On actionne ensuite la commande primaire 125 de manière à coupler le moteur hydraulique 120 avec l'arbre 130. Dans le cas d'un moteur hydraulique 120 avec un distributeur étagé comme présenté précédemment notamment en référence aux figures 6, 7, 8, et 9, l'alimentation du moteur hydraulique 120 va entraîner l'engagement en rotation du bloc cylindres 4 par rapport à l'un ou l'autre des ensembles tels que définis précédemment, et ainsi mettre le moteur hydraulique 120 en cylindrée.

De plus, l'établissement de la pression dans les lignes HP et BP va entrainer l'application d'une pression via les commandes 114 et 124 qui prélèvent la pression dans la ligne HP comme décrit précédemment, et assurent ainsi le maintien des embrayages 112 et 122 en position embrayée.

Le système ainsi engagé entraine donc l'arbre 130 en rotation et réalise alors une assistance hydraulique, tout en assurant son maintien en fonctionnement.

Le désengagement de l'assistance peut être réalisé soit en n'actionnant plus les commandes primaires 115 et 125 ou en appliquant des commandes primaires inverses , allant dans le sens du désengagement de l'un ou des embrayages 112 et/ou 122, et/ou via le distributeur 146 afin de vidanger les lignes HP et BP en envoyant le fluide dans le carter du moteur 120 et /ou de la pompe 110 On peut ainsi diminuer le couple des embrayages 112 et 122 de manière à les abaisser sous la valeur seuil permettant d'entrainer l'appareil hydraulique associé.

Le montage associé aux appareils hydrauliques 1 selon un aspect de l'invention est donc simple à réaliser, et ne nécessite pas d'éléments de commutation multiples afin d'établir plusieurs paliers de pression pour la mise en service des appareils hydrauliques 1.

Selon un mode de réalisation particulier, la pompe hydraulique 110 est montée sur un essieu primaire de véhicule, lié à une ou plusieurs roues motrices, tandis que le moteur hydraulique 120 est monté sur un essieu secondaire de véhicule. L'essieu primaire est entrainé par un moteur primaire, typiquement thermique.

La pompe hydraulique 110 tourne donc à la même vitesse que les roues motrices de l'essieu primaire du véhicule, et le moteur hydraulique 120 tourne à la même vitesse que l'essieu secondaire du véhicule.

Lorsque la pompe hydraulique 110 et le moteur hydraulique 120 sont désengagés, seul le moteur primaire assure l'entrainement du véhicule. Lorsque la pompe hydraulique 110 et le moteur hydraulique 120 sont mis en service, la pompe hydraulique 110 prélève ainsi le couple de l'essieu primaire, et le transmet à l'essieu secondaire via le moteur hydraulique 120 qui assure alors son entrainement.

On obtient ainsi une transmission intégrale, avec un ratio 1 :1 entre les vitesses de rotation de la pompe hydraulique 110, du moteur hydraulique 120 et des roues du véhicule, aux pertes et fuites du circuit hydraulique près.

Un tel montage des appareils hydrauliques sur les essieux permet ainsi notamment de s'affranchir des rapports de réduction inhérents aux montages antérieurs des appareils hydrauliques sur des prises de force de moteurs thermiques ou sur des arbres de vitesse, et de proposer une structure simplifiée pour la réalisation d'une assistance hydraulique sur un véhicule.

En variante, la pompe hydraulique 110 peut alors alimenter deux moteurs hydrauliques, chacun reliés à un demi-axe d'essieu entrainant une roue.

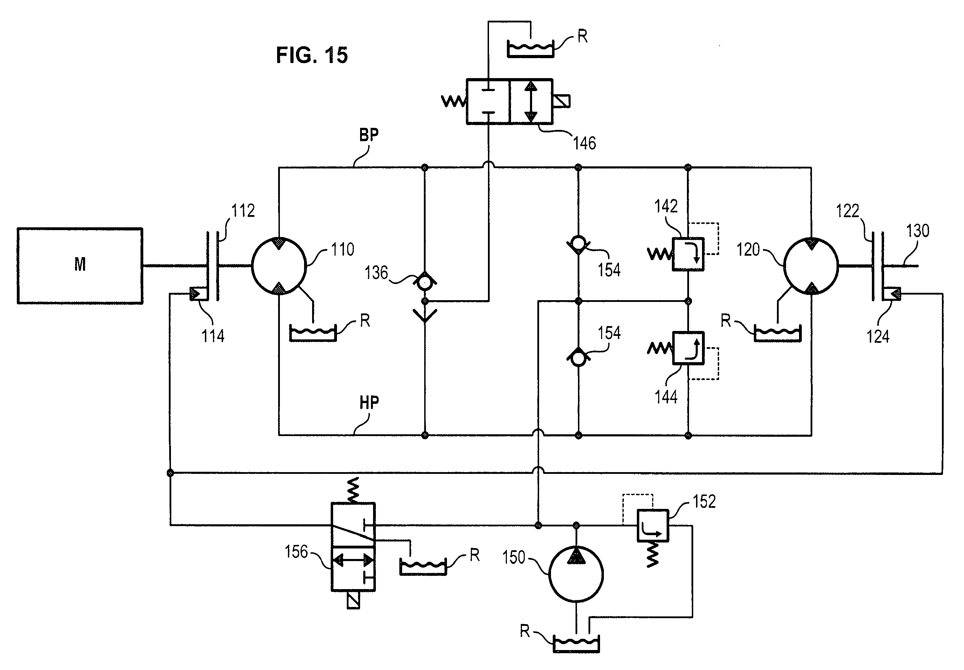

La figure 15 présente une variante du montage précédent.

Ce montage comprend également deux appareils hydrauliques 1 tels que présentés précédemment, l'un 110 fonctionnant en tant que pompe et l'autre 120 fonctionnant en tant que moteur. On représente sur ce schéma les lignes de drain des carters de ces appareils hydrauliques 110 et 120, reliées chacune au réservoir à pression ambiante R.

Comme précédemment, ce montage permet de réaliser la mise en service des deux appareils hydrauliques, afin de réaliser une assistance hydrauliques sur l'arbre 130 couplé au moteur 120 via l'embrayage 122. Les valves de surpression 142 et 144 sont disposées de manière à décharger l'excédent de pression des lignes HP et BP dans le circuit C ou dans les carters des appareils hydrauliques 110 et 120.

Le distributeur 146 réalise ici une fonction de vidange des lignes HP et BP, en déchargeant la pression la plus élevée de ces deux lignes dans le réservoir R, cette pression la plus élevée parmi les deux lignes HP et BP étant prélevée au moyen d'un clapet navette 136.

Ce montage comprend une pompe de gavage 150 qui prélève du fluide dans le réservoir R, et réalise le gavage du circuit. Elle est associée à une valve de surpression 152 permet de décharger l'excès de pression dans le réservoir R.

Cette pompe de gavage 150 est de plus associée à un distributeur d'engagement 156, permettant de relier les commandes hydrauliques 114 et 124 pilotant respectivement les embrayages 112 et 122 soit à la pompe de gavage 150, soit au un réservoir à pression ambiante R. Ainsi, l'activation du distributeur d'engagement 156 réalise l'engagement des deux embrayages 112 et 122, et donc la mise en service des deux appareils hydrauliques 110 et 120.

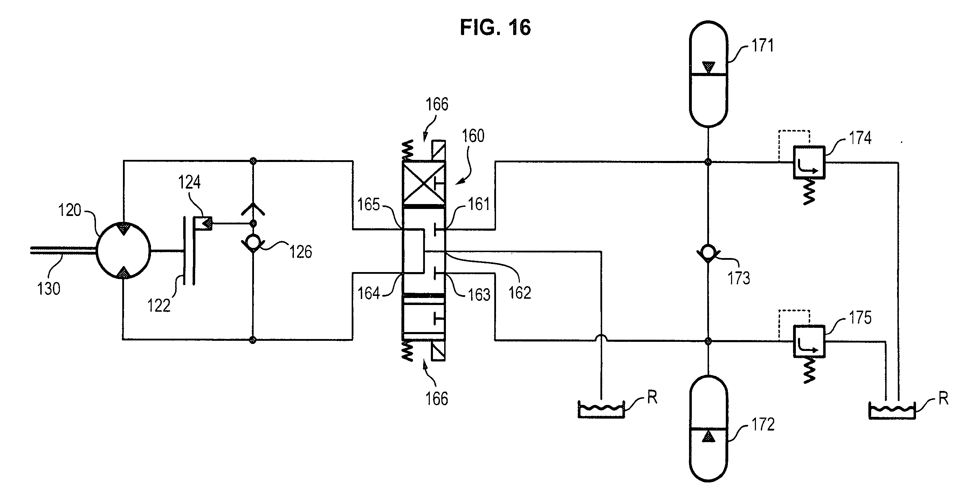

La figure 16 présente une autre variante dans laquelle l'appareil hydraulique est alimenté par des accumulateurs, ce qui permet de réaliser un circuit à récupération d'énergie.

On représente à nouveau sur ce schéma un appareil hydraulique 120 selon l'invention, lié à un arbre 130, ledit appareil hydraulique ayant ici un fonctionnement de moteur. La mise en service de ce moteur 120 est pilotée au moyen de l'embrayage 122, qui est lui-même piloté par la commande hydraulique 124.

Un clapet navette 126 prélève la pression la plus élevée des deux branches hydrauliques reliées au moteur 120, et l'applique à la commande 124.

L'alimentation en pression est réalisée au moyen de deux accumulateurs 171 et 172. Afin d'illustrer un exemple de fonctionnement, on considérera ici que l'accumulateur 171 est un accumulateur haute pression, et que l'accumulateur 172 est un accumulateur basse pression. Un clapet anti retour 173 est disposé entre ces deux accumulateurs, de manière à éviter que la pression soit supérieure au niveau de l'accumulateur basse pression 172 par rapport à la pression au niveau de l'accumulateur haute pression 171.

Deux valves de surpression 174 et 175 permettent de décharger un excès de pression dans un réservoir R à pression ambiante.

Le circuit tel que présenté comprend en outre un distributeur 160, présentant cinq orifices :
- Un premier orifice 161 relié à l'accumulateur haute pression 171,
- Un deuxième orifice 162 relié au réservoir R,
- Un troisième orifice 163 relié à l'accumulateur basse pression 172,
- Un quatrième orifice 164 et un cinquième orifice 165 reliés à l'admission et au refoulement du moteur 120.

Ce distributeur est piloté par des moyens de pilotage 166 comprenant notamment des commandes hydrauliques électriques, pneumatiques ou électriques ainsi que des moyens de rappel tels que des ressorts assurant la remise à la position d'équilibre du distributeur 160 en l'absence de commande de pilotage.

Ce distributeur 160 peut alterner entre trois configurations que l'on décrit ci-après.

Dans une première configuration, qui est la configuration représentée sur la figure 16, les quatrième et cinquième orifices 164 et 165 sont reliés au deuxième orifice 162, tandis que les premier et troisième orifices 161 et 163 sont fermés. Cette configuration relie donc l'admission et le refoulement du moteur 120 au réservoir R ; il n'y a pas de pression pour enclencher l'embrayage 120, et le moteur 120 est donc désengagé.

Dans une deuxième configuration, le premier orifice 161 est relié au cinquième orifice 165, le troisième orifice 163 est relié au quatrième orifice 164, et le deuxième orifice 162 est fermé.

Cette configuration relie donc le moteur 120 aux accumulateurs 171 et 172, ce qui définit donc une ligne haute pression et une ligne basse pression, en l'occurrence respectivement la ligne reliée à l'accumulateur haute pression 171 et la ligne reliée à l'accumulateur basse pression 172, enclenche l'embrayage 122 et met en service ainsi le moteur 120 de manière à ce qu'il entraine en rotation l'arbre 130.

La troisième configuration est similaire à la deuxième configuration, mais inverse les liaisons des premier et troisième orifices 161 et 163 avec les quatrième et cinquième orifices 164 et 165, permettant ainsi d'inverser le sens de rotation du moteur 120.

Que ce soit en première ou en troisième configuration, le moteur 120 est alimenté en pression par l'accumulateur haute pression, et se décharge ensuite dans l'accumulateur basse pression qui réalise une fonction de récupération d'énergie.

Comme pour les circuits présentés sur les figures précédentes, ce circuit exploite la structure avantageuse de l'appareil hydraulique selon l'invention, en l'occurrence le moteur 120, permettant de réaliser une mise en service simple, sans usure ni bruit, ce qui permet ainsi d'obtenir un circuit simplifié et donc réduit en termes d'encombrement, de coût et de masse.

Dans le cas particulier d'une application sur un véhicule comprenant
- un moteur primaire adapté pour entrainer sélectivement une pompe hydraulique à cylindrée variable équipée ou non d'un embrayage, et
- N essieux menés avec N entier naturel supérieur ou égal à 1, chacun desdits essieux étant muni d'un appareil hydraulique tel que décrit précédemment reliés entre eux de manière à ce que les appareils hydrauliques des essieux menés soient montés en parallèle par rapport à l'appareil hydraulique de l'essieu menant.

Le véhicule est alors avantageusement également équipé d'un calculateur qui reçoit une information caractéristique de la vitesse des moteurs menés liés aux roues et une information caractéristique de la vitesse d'entrainement en rotation de la pompe.

Le calculateur réalise alors un réglage en cylindrée de la pompe hydraulique dès sa mise en route de telle sorte que la cylindrée de la pompe multipliée par sa vitesse d'entrainement en rotation soit égale à la cylindrée des totale des N moteurs multipliée par la vitesse d'entrainement des moteurs menés liés aux roues plus Epsilon.

La valeur Epsilon représente un glissement qui procure un effet de traction. Epsilon peut être nul ou très faible au moment de l'embrayage La cylindrée prévue des moteurs peut tenir compte d'un taux de fuite ou des pertes du circuit.

Lors de la mise route de la pompe, l'embrayage du ou des appareils hydrauliques tels que décrit précédemment et fonctionnant en moteur peut se faire concomitamment, ou après une légère temporisation. Lorsque les moteurs sont alimentés, mais non embrayés, il peuvent tourner sans couple à une vitesse approchant celle de l'arbre sur lequel ils sont placés, ce qui est une situation avantageuse pour favoriser un embrayage sans secousse, particulièrement si le système de liaison du bloc cylindres au carter est du type à crabots. A ce moment, bien que la pompe débite et que les moteurs tournent, il n'y a très peu de couple fourni, et la différence de pression entre les lignes hydraulique d'alimentation et de retour est très faible.

Lorsque la pression s'établit dans la boucle fermée du circuit hydraulique, créant ainsi une ligne de retour basse pression et une ligne d'alimentation haute pression, le calculateur réalise un pilotage de la cylindrée de la pompe en fonction des variations de pression dans le circuit hydraulique, par exemple au moyen de relevés de pression ponctuels en différents points du circuit.

Une fois le ou les moteurs hydrauliques embrayés, une différence de pression dans les lignes hydrauliques proportionnelle au couple fourni par les moteurs va se créer, et un pilotage de la pompe en fonction de la pression devient possible. Le pilotage de cylindrée de la pompe hydraulique peut être varié, soit en couple, soit en vitesse, pour réaliser la traction ou la retenue des essieux menés comme bien connu de l'Homme du métier. Ce pilotage à partir de l'information de pression peut être activé à partir du moment ou une différence de pression supérieure à un seuil prédéterminé souhaité par l'homme du métier apparaît entre les lignes hydrauliques d'alimentation et de retour. Il peut également être activé après une temporisation après l'embrayage ou tout autre moyen de détecter que l'embrayage des moteurs est effectif.

Ce mode de réalisation particulier permet un entrainement par le moteur mené plus immédiat, entrainant moins d'efforts, de patinage, d'usure, de bruit, évitant des secousses ou des pics de pression.

Couplé à l'effet progressif de l'embrayage sans choc de l'appareil hydraulique tel que présenté, et particulièrement s'il est progressif, on obtient un engagement de l'assistance hydraulique particulièrement souple et silencieux.

## Revendications

1. Appareil hydraulique (1) à pistons radiaux, comprenant :
- un carter (6) définissant un premier ensemble,
- un arbre (2) définissant un second ensemble, lesdits premier et second ensembles étant libres en rotation l'un par rapport à l'autre,
- une came (3) multilobes liée en rotation à l'un desdits premier ou second ensembles,
- un distributeur (51) et un couvercle de distributeur (52)
- un bloc cylindres (4) monté libre en rotation par rapport auxdits premier et second ensembles, et comprenant une pluralité de cylindres (41) dans lesquels sont disposés des pistons (42) guidés à coulissement radial dans des cylindres (41) respectifs du bloc cylindres (4) et prenant appui sur les lobes de la came (3), ledit appareil (1) comprend des ressorts (43) d'appui disposés dans lesdits cylindres (41) de manière à maintenir les pistons (42) en appui contre la came (3),
**caractérisé en ce que** ledit appareil hydraulique (1) comprend en outre des moyens d'engagement en rotation adapté pour, lors de l'application d'une commande, immobiliser le bloc cylindres (4) par rapport à l'autre desdits premier ou second ensembles.

2. Appareil hydraulique (1) selon la revendication 1, dans lequel lesdits moyens d'engagement (7) sont adaptés pour réaliser un engagement par frottement dudit bloc cylindres (4) avec ledit premier ou second ensemble.

3. Appareil hydraulique (1) selon l'une des revendications 1 ou 2, dans lequel l'un desdits ressorts (43) d'appui présente une raideur supérieure à la raideur desdits autres ressorts (43) d'appui, de manière à définir une indexation du bloc cylindres (4) par rapport à la came (3) lorsque le bloc cylindres (4) est libre en rotation par rapport auxdits premier et second ensembles.

4. Appareil hydraulique (1) selon l'une des revendications 1 à 3, dans lequel ladite came (3) est liée en rotation à l'arbre (2), les moyens d'engagement étant adaptés pour lier en rotation le bloc cylindres (4) au carter (6).

5. Appareil hydraulique (1) selon l'une des revendications 1 à 3, dans lequel ladite came (3) est liée en rotation au carter (3), les moyens d'engagement étant adaptés pour lier en rotation le bloc cylindres (4) à l'arbre (2).

6. Appareil hydraulique (1) selon l'une des revendications 1 à 5, comprenant en outre un piston de synchronisation (91) lié en rotation à l'autre desdits premier ou second ensembles et adapté pour coopérer avec un logement aménagé dans le bloc cylindres (4), ledit logement formant un secteur angulaire de manière à définir deux positions de butée du piston de synchronisation (91) dans ledit logement, lesdites deux positions de butée définissant deux configurations des conduits internes du distributeur (51) et du bloc cylindres (4) correspondant aux deux sens de rotation de l'ensemble mobile dudit appareil hydraulique (1), ledit piston de synchronisation (91) étant configuré de manière à positionner le bloc cylindres (4) dans la position de butée adaptée préalablement à l'immobilisation par les moyens d'engagement du bloc cylindres (4) par rapport à l'autre desdits premier ou second ensembles.

7. Appareil hydraulique (1) selon l'une des revendications 1 à 6, dans lequel lesdits moyens d'engagement comprennent
- des moyens de rappel (9) tendant à déplacer le bloc cylindres (4) pour le désengager en rotation par rapport à l'autre desdits premier ou second ensembles, et
- des conduits internes du distributeur (51) configurés pour, lors de l'application d'une pression, engager le bloc cylindres (4) en rotation par rapport à l'autre desdits premier ou second ensembles.

8. Appareil hydraulique (1) selon l'une des revendications 1 à 6, dans lequel lesdits moyens d'engagement (7) comprennent un électro-aimant, configuré de manière à, lors de son activation, générer un champ magnétique qui entraine une force d'attraction entre le bloc cylindres (4) et un élément de frottement (24), de manière à immobiliser le bloc cylindres (4) par rapport audit premier ou second ensemble.

9. Appareil hydraulique (1) selon l'une des revendications 1 à 6, dans lequel lesdits moyens d'engagement (7) comprennent un dispositif à dents et rainures aménagées sur les moyens d'engagement (7) adapté pour coopérer avec des dents et rainures aménagées sur le bloc cylindres (4) ou sur ledit premier ou second ensemble de manière à immobiliser le bloc cylindres (4) par rapport audit premier ou second ensemble.

10. Appareil hydraulique (1) selon l'une des revendications 1 à 6 dans lequel lesdits moyens d'engagement (7) comprennent
- une chambre étanche (56) remplie d'huile et dans laquelle se trouvent des disques (25, 45) liés en rotation au bloc cylindres (4) et à l'autre desdits premier ou second ensembles, et
- une chambre de commande (57) adaptée pour piloter la pression au sein de la chambre étanche (56), de manière à réaliser un engagement par visco-couplage.

11. Système comprenant au moins deux appareils hydrauliques (1) selon l'une des revendications 1 à 10, dans lequel un premier desdits appareils hydrauliques (110) est lié à un moteur principal (M) via un embrayage (112) de manière à fonctionner en pompe, et alimenter via un circuit hydraulique (C) un second desdits appareils hydrauliques (120) fonctionnant en tant que moteur pour réaliser une assistance sur un arbre d'entrainement (130) d'une roue de véhicule, lesdits premier et second appareils hydrauliques (110, 120) comprenant une ligne de drain (117) commune pour leurs carters respectifs reliée audit circuit hydraulique (C) via des clapets anti-retour (118, 119).

12. Système comprenant au moins un appareil hydraulique (1) selon l'une des revendications 1 à 10 fonctionnant en moteur et montés chacun sur un essieu mené d'un véhicule, et une pompe hydraulique à cylindrée variable, ledit système comprenant en outre un calculateur adaptéµ pour piloter la cylindrée de la pompe hydraulique de sorte que la cylindrée de la pompe hydraulique multipliée par sa vitesse d'entrainement en rotation soit égale à la cylindrée des totale desdits moteurs hydrauliques (1) multipliée par la vitesse d'entrainement des moteurs hydrauliques (1) menés liés aux essieux plus Epsilon, où Epsilon représente un glissement qui procure un effet de traction.

13. Véhicule comprenant un moteur primaire entrainant en rotation un essieu primaire définissant ainsi les roues motrices du véhicule, et un essieu secondaire,
ledit véhicule comprenant un appareil hydraulique primaire selon l'une des revendications 1 à 10 monté sur ledit essieu primaire de manière à être entrainé en rotation à la même vitesse que lesdites roues motrices, et un appareil hydraulique secondaire selon l'une des revendications 1 à 10 monté sur l'essieu secondaire de manière à être entrainé en rotation à la même vitesse que la ou les roues montées sur ledit essieu secondaire, lesdits appareils hydrauliques primaire et secondaire étant associés de manière à permettre l'entrainement de l'essieu secondaire par l'appareil hydraulique secondaire lors de la mise en service desdits appareils hydrauliques.

14. Procédé de mise en cylindrée d'un appareil hydraulique comprenant un carter (6) définissant un premier ensemble, un arbre (2) définissant un second ensemble, lesdits premier et second ensembles étant libres en rotation l'un par rapport à l'autre, une came (3) multilobes liée en rotation à l'un desdits premier ou second ensembles, un bloc cylindres (4) monté libre en rotation par rapport auxdits premier et second ensembles, et comprenant une pluralité de cylindres (41) dans lesquels sont disposés des pistons (42) guidés à coulissement radial dans des cylindres (41) respectifs du bloc cylindres (4), prenant appui sur les lobes de la came (3) et étant maintenus en appui contre la came (3), ledit procédé étant **caractérisé en ce qu'**on pilote l'immobilisation du bloc cylindres (4) par rapport à l'autre desdits premier ou second ensembles de manière à réaliser la mise en cylindrée de l'appareil hydraulique.

15. Procédé selon la revendication 14, dans lequel l'immobilisation du bloc cylindres (4) par rapport à l'autre desdits premier ou second ensembles est réalisée par application d'une pression dans un distributeur (5) dudit appareil hydraulique entrainant le déplacement dudit distributeur (5) de manière à ce qu'il agisse sur le bloc cylindres (4) pour l'immobiliser par rapport à l'autre desdits premier ou second ensembles, ladite pression étant par exemple appliquée par une pompe de gavage.

## Patentansprüche

1. Hydraulikvorrichtung (1) mit radialen Kolben, umfassend:
- ein Gehäuse (6), das eine erste Einheit definiert,
- eine Welle (2), die eine zweite Einheit definiert, wobei die erste und zweite Einheit in Bezug zueinander frei rotieren,
- einen multilobalen Nocken (3), der mit einer, der ersten oder zweiten Einheit, rotierend verbunden ist,
- einen Verteiler (51) und einen Verteilerdeckel (52),
- einen Zylinderblock (4), der in Bezug zur ersten und zweiten Einheit frei rotierend montiert ist und eine Vielzahl von Zylindern (41) umfasst, in welchen Kolben (42) angeordnet sind, die radial gleitend in den entsprechenden Zylindern (41) des Zylinderblocks (4) geführt werden und sich auf den Lappen des Nockens (3) abstützen, wobei die Vorrichtung (1) Stützfedern (43) umfasst, die in den Zylindern (41) derart angeordnet sind, dass die Kolben (42) in Abstützung auf dem Nocken (3) gehalten werden,
**dadurch gekennzeichnet, dass** die Hydraulikvorrichtung (1) ferner Rotationseingriffmittel umfasst, die ausgebildet sind, um bei Ausführung eines Befehls den Zylinderblock (4) in Bezug zu der anderen von der ersten oder zweiten Einheit zu blockieren.

2. Hydraulikvorrichtung (1) nach Anspruch 1, wobei die Eingriffmittel (7) ausgebildet sind, um einen Eingriff durch Reiben des Zylinderblocks (4) mit der ersten oder zweiten Einheit durchzuführen.

3. Hydraulikvorrichtung (1) nach einem der Ansprüche 1 oder 2, wobei eine der Stützfedern (43) eine Steifigkeit aufweist, die höher ist als die Steifigkeit der anderen Stützfedern (43), so dass eine Indexierung des Zylinderblocks (4) in Bezug zum Nocken (3) festgelegt wird, wenn der Zylinderblock (4) in Bezug zur ersten und zweiten Einheit frei rotiert.

4. Hydraulikvorrichtung (1) nach einem der Ansprüche 1 bis 3, wobei der Nocken (3) mit der Welle (2) rotierend verbunden ist, wobei die Eingriffmittel ausgebildet sind, um den Zylinderblock (4) mit dem Gehäuse (6) rotierend zu verbinden.

5. Hydraulikvorrichtung (1) nach einem der Ansprüche 1 bis 3, wobei der Nocken (3) mit dem Gehäuse (3) rotierend verbunden ist, wobei die Eingriffmittel ausgebildet sind, um den Zylinderblock (4) mit der Welle (2) rotierend zu verbinden.

6. Hydraulikvorrichtung (1) nach einem der Ansprüche 1 bis 5, umfassend ferner einen Synchronisierungskolben (91), der mit der anderen von der ersten oder zweiten Einheit rotierend verbunden ist und ausgebildet, um mit einer in dem Zylinderblock (4) ausgebildeten Aufnahme zusammenzuwirken, wobei die Aufnahme einen Winkelsektor bildet, um zwei Anschlagpositionen des Synchronisierungskolbens (91) in der Aufnahme zu bestimmen, wobei die zwei Anschlagpositionen zwei Konfigurationen der internen Leitungen des Verteilers (51) und des Zylinderblocks (4) bestimmen, die den beiden Rotationsrichtungen der mobilen Einheit der Hydraulikvorrichtung (1) entsprechen, wobei der Synchronisierungskolben (91) derart konfiguriert ist, dass der Zylinderblock (4) in der Anschlagposition positioniert ist, die zuvor an die Blockade durch die Eingriffmittel des Zylinderblocks (4) in Bezug zu der anderen von der ersten oder zweiten Einheit angepasst ist.

7. Hydraulikvorrichtung (1) nach einem der Ansprüche 1 bis 6, wobei die Eingriffmittel umfassen:
- Rückstellmittel (9), welche den Zylinderblock (4) derart verlagern, dass er in Bezug zu der anderen von der ersten oder zweiten Einheit rotierend getrennt wird, und
- interne Leitungen des Verteilers (51), die konfiguriert sind, um bei Anwendung eines Drucks den Zylinderblock (4) in Bezug zu der anderen von der ersten oder zweiten Einheit in Eingriff zu bringen.

8. Hydraulikvorrichtung (1) nach einem der Ansprüche 1 bis 6, wobei die Eingriffmittel (7) einen Elektromagneten umfassen, der derart konfiguriert ist, dass bei seiner Aktivierung ein Magnetfeld erzeugt wird, das eine Anziehungskraft zwischen dem Zylinderblock (4) und einem Reibungselement (24) ausübt, so dass der Zylinderblock (4) in Bezug zur ersten oder zweiten Einheit blockiert wird.

9. Hydraulikvorrichtung (1) nach einem der Ansprüche 1 bis 6, wobei die Eingriffmittel (7) eine Vorrichtung mit Zähnen und Rillen umfassen, die auf den Eingriffmitteln (7) ausgebildet sind, die ausgebildet ist, um mit Zähnen und Rillen zusammenzuwirken, die auf dem Zylinderblock (4) oder auf der ersten oder zweiten Einheit ausgebildet sind, um den Zylinderblock (4) in Bezug zur ersten oder zweiten Einheit zu blockieren.

10. Hydraulikvorrichtung (1) nach einem der Ansprüche 1 bis 6, wobei die Eingriffmittel (7) umfassen:
- eine dichte Kammer (56), die mit Öl gefüllt ist und in welcher sich Scheiben (25, 45) befinden, die mit dem Zylinderblock (4) und der anderen von der ersten oder zweiten Einheit rotierend verbunden sind, und
- eine Steuerkammer (57), die ausgebildet ist, um den Druck innerhalb der dichten Kammer (56) zu steuern, um einen Eingriff durch Viskokuppeln durchzuführen.

11. System, umfassend mindestens zwei Hydraulikvorrichtungen (1) nach einem der Ansprüche 1 bis 10, wobei eine erste der Hydraulikvorrichtungen (110) mit einem Hauptmotor (M) über eine Kupplung (112) derart verbunden ist, dass sie als Pumpe funktioniert und über eine Hydraulikleitung (C) eine zweite der Hydraulikvorrichtungen (120) versorgt, die als Motor funktioniert, um eine Antriebswelle (130) eines Fahrzeugrads zu unterstützen, wobei die erste und zweite Hydraulikvorrichtungen (110, 120) eine für ihre jeweiligen Gehäuse gemeinsame Drainageleitung (117) umfassen, die mit der Hydraulikleitung (C) über Rücklaufsperrventile (118, 119) verbunden ist.

12. System, umfassend mindestens eine Hydraulikvorrichtung (1) nach einem der Ansprüche 1 bis 10, die als Motor funktioniert und jeweils auf einer geführten Achse eines Fahrzeugs montiert ist, und eine Hydraulikpumpe mit variablem Hubraum, wobei das System ferner einen Rechner umfasst, der ausgebildet ist, um den Hubraum der Hydraulikpumpe derart zu steuern, dass der Hubraum der Hydraulikpumpe, multipliziert mit ihrer Rotationsantriebsgeschwindigkeit, gleich dem Hubraum der Summe der Hydraulikmotoren (1), multipliziert mit der Antriebsgeschwindigkeit der geführten Hydraulikmotoren (1) entspricht, die mit den Achsen verbunden sind, ist, plus Epsilon, wobei Epsilon ein Rutschen darstellt, das eine Traktion bewirkt.

13. Fahrzeug, umfassend einen primären Motor, der eine primäre Achse rotierend antreibt, wodurch die Antriebsräder eines Fahrzeugs definiert werden, und eine sekundäre Achse,
wobei das Fahrzeug eine primäre Hydraulikvorrichtung nach einem der Ansprüche 1 bis 10 umfasst, die auf der primären Achse derart montiert ist, dass sie in derselben Geschwindigkeit wie die Antriebsräder rotierend angetrieben wird, und eine sekundäre Hydraulikvorrichtung nach einem der Ansprüche 1 bis 10, die auf der sekundären Achse derart montiert ist, dass sie in derselben Geschwindigkeit wie das oder die Räder rotierend angetrieben wird, die auf der sekundären Achse montiert sind, wobei die primäre und sekundäre Hydraulikvorrichtungen derart verbunden sind, dass der Antrieb der sekundären Achse durch die sekundäre Hydraulikvorrichtung bei der Inbetriebnahme der Hydraulikvorrichtungen möglich ist.

14. Verfahren zur Zylinderimplementierung einer Hydraulikvorrichtung, umfassend ein Gehäuse (6), das eine erste Einheit definiert, eine Welle (2), die eine zweite Einheit definiert, wobei die erste und zweite Einheit in Bezug zueinander frei rotieren, einen multilobalen Nocken (3), der mit einer, der ersten oder zweiten Einheit, rotierend verbunden ist, einen Zylinderblock (4), der in Bezug zur ersten und zweiten Einheit frei rotierend montiert ist, und eine Vielzahl von Zylindern (41) umfasst, in welchen Kolben (42) angeordnet sind, die radial gleitend in den entsprechenden Zylindern (41) des Zylinderblocks (4) geführt werden und sich auf den Lappen des Nockens (3) abstützen und in Abstützung auf dem Nocken (3) gehalten werden,
wobei das Verfahren **dadurch gekennzeichnet ist, dass** die Blockade des Zylinderblocks (4) in Bezug zur anderen von der ersten oder zweiten Einheit derart gesteuert wird, dass die Zylinderimplementierung der Hydraulikvorrichtung durchgeführt wird.

15. Verfahren nach Anspruch 14, wobei die Blockade des Zylinderblocks (4) in Bezug zur anderen von der ersten oder zweiten Einheit durch Anwendung eines Drucks in einem Verteiler (5) der Hydraulikvorrichtung durchgeführt wird, was zur Verlagerung des Verteilers (5) derart führt, dass er auf den Zylinderblock (4) wirkt, um ihn in Bezug auf die andere von der ersten oder zweiten Einheit zu blockieren, wobei der Druck beispielsweise von einer Zusatzpumpe ausgeübt wird.

## Claims

1. A hydraulic apparatus (1) with radial pistons, comprising:
- a casing (6) defining a first assembly,
- a shaft (2) defining a second assembly, said first and second assemblies being free in rotation one relative to the other,
- a multilobe cam (3) connected in rotation to one of said first or second assemblies,
- a distributor (51) and a distributor lid (52),
- a cylinder block (4) mounted free in rotation relative to said first and second assemblies, and comprising a plurality of cylinders (41) in which guided pistons (42) are arranged to slide radially in respective cylinders (41) of the cylinder block (4) and supported on the lobes of the cam (3), said apparatus (1) comprises support springs (43) arranged in said cylinders (41) so as to keep the pistons (42) supported against the cam (3),
**characterized in that** said hydraulic apparatus (1) further comprises engagement means in rotation adapted, during the application of a command, to immobilise the cylinder block (4) relative to the other of said first or second assemblies.

2. The hydraulic apparatus (1) according to claim 1, wherein said engagement means (7) are adapted to provide engagement by friction of said cylinder block (4) with said first or second assembly.

3. The hydraulic apparatus (1) according to one of claims 1 or 2, wherein one of said support springs (43) has a stiffness greater than the stiffness of said other support springs (43) so as to define indexation of the cylinder block (4) relative to the cam (3) when the cylinder block (4) is free in rotation relative to said first and second assemblies.

4. The hydraulic apparatus (1) according to one of claims 1 to 3, wherein said cam (3) is connected in rotation to the shaft (2), the engagement means being adapted to connect in rotation the cylinder block (4) to the casing (6).

5. The hydraulic apparatus (1) according to one of claims 1 to 3, wherein said cam (3) is connected in rotation to the casing (3), the engagement means being adapted to connect in rotation the cylinder block (4) to the shaft (2).

6. The hydraulic apparatus (1) according to one of claims 1 to 5, further comprising a synchronisation piston (91) connected in rotation to the other of said first or second assemblies and adapted to cooperate with a housing arranged in the cylinder block (4), said housing forming an angular sector so as to define two stop positions of the synchronisation piston (91) in said housing, said two stop positions defining two configurations of the internal conduits of the distributor (51) and of the cylinder block (4) corresponding to the two directions of rotation of the mobile assembly of said hydraulic apparatus (1), said synchronisation piston (91) being configured so as to position the cylinder block (4) in the stop position adapted prior to immobilisation by the engagement means of the cylinder block (4) relative to the other of said first or second assemblies.

7. The hydraulic apparatus (1) according to one of claims 1 to 6, wherein said engagement means comprise
- return means (9) tending to move the cylinder block (4) to disengage it in rotation relative to the other of said first or second assemblies, and
- internal conduits of the distributor (51) configured, during the application of pressure, to engage the cylinder block (4) in rotation relative to the other of said first or second assemblies.

8. The hydraulic apparatus (1) according to one of claims 1 to 6, wherein said engagement means (7) comprise an electro-magnet, configured so as to, during its activation, generate a magnetic field which causes an attraction force between the cylinder block (4) and a friction element (24) so as to immobilise the cylinder block (4) relative to said first or second assembly.

9. The hydraulic apparatus (1) according to one of claims 1 to 6, wherein said engagement means (7) comprise a device with teeth and grooves arranged on the engagement means (7) adapted to cooperate with teeth and grooves arranged on the cylinder block (4) or on said first or second assembly so as to immobilise the cylinder block (4) relative to said first or second assembly.

10. The hydraulic apparatus (1) according to one of claims 1 to 6, wherein said engagement means (7) comprise
- a sealed chamber (56) filled with oil and housing discs (25, 45) connected in rotation to the cylinder block (4) and to the other of said first or second assemblies, and
- a control chamber (57) adapted to control the pressure inside the sealed chamber (56), so as to produce engagement by visco-coupling.

11. The system comprising at least two hydraulic apparatuses (1) according to one of claims 1 to 10, wherein a first of said hydraulic apparatuses (110) is connected to a principal motor (M) via a clutch (112) so as to function as a pump, and via a hydraulic circuit (C) feed a second of said hydraulic apparatuses (120) operating as motor to provide assistance on a drive shaft (130) of a vehicle wheel, said first and second hydraulic apparatuses (110, 120) comprising a common drain line (117) for their respective casings connected to said hydraulic circuit (C) via check valves (118, 119).

12. The system comprising at least one hydraulic apparatus (1) according to one of claims 1 to 10 operating as a motor and each mounted on a driven axle of a vehicle, and a hydraulic pump with variable displacement, said system further comprising a calculator adapted to control the displacement of the hydraulic pump such that the displacement of the hydraulic pump multiplied by its drive speed in rotation is equal to the displacement of the total of said hydraulic motors (1) multiplied by the drive speed of the driven hydraulic motors (1) connected to the axles plus Epsilon, where Epsilon represents sliding which produces a traction effect.

13. A vehicle comprising a primary motor driving a primary axle in rotation defining the motorised wheels of the vehicle, and a secondary axle,
said vehicle comprising a primary hydraulic apparatus according to one of claims 1 to 10 mounted on said primary axle so as to be driven in rotation at the same speed as said motorised wheels, and a secondary hydraulic apparatus according to one of claims 1 to 10 mounted on the secondary axle so as to be driven in rotation at the same speed as the wheel (s) mounted on said secondary axle, said hydraulic primary and secondary apparatuses being connected so as to enable driving of the secondary axle by the secondary hydraulic apparatus during the commissioning of said hydraulic apparatuses.

14. A method for displacement of a hydraulic apparatus comprising a casing (6) defining a first assembly, a shaft (2) defining a second assembly, said first and second assemblies being free in rotation one relative to the other, a multilobe cam (3) connected in rotation to one of said first or second assemblies, a cylinder block (4) mounted free in rotation relative to said first and second assemblies, and comprising a plurality of cylinders (41) in which pistons (42) are arranged guided to slide radially in respective cylinders (41) of the cylinder block (4), supported on the lobes of the cam (3) and being held supported against the cam (3),
said method being **characterized in that** immobilisation of the cylinder block (4) relative to the other of said first or second assemblies is controlled so as to execute displacement of the hydraulic apparatus.

15. The method according to claim 14, wherein immobilisation of the cylinder block (4) relative to the other of said first or second assemblies is done by application of pressure in a distributor (5) of said hydraulic apparatus driving the displacement of said distributor (5) so that it acts on the cylinder block (4) to immobilise it relative to the other of said first or second assemblies, said pressure being for example applied by a boost pump.
